# FASCICULE DE BREVET EUROPEEN

(11) **EP 2 054 328 B1**
(45) Date de publication et mention de la délivrance du brevet: **24.11.2010**
(21) Numéro de dépôt: 07788417.9
(22) Date de dépôt: 14.08.2007
(51) Int. Cl.: B65G 47/28, B65G 47/32, B65G 47/53

(54) **PROCEDE DE REGULATION D'UN FLUX DE PRODUITS ET AGENCEMENT POUR LA MISE EN OEUVRE D'UN TEL PROCEDE**
VERFAHREN ZUR REGULIERUNG EINES PRODUKTSTROMS UND LAYOUT ZUR DURCHFÜHRUNG SOLCH EINES VERFAHRENS
METHOD OF REGULATING A FLOW OF PRODUCTS AND LAYOUT FOR THE IMPLEMENTATION OF SUCH A METHOD

(30) Priorité: 24.08.2006 FR 0653448
(43) Date de publication de la demande: 06.05.2009
(73) Titulaire: Sidel Participations, 76930 Octeville Sur Mer (FR)
(72) Inventeur: DUCHEMIN, Guillaume, F-76930 Octeville Sur Mer (FR); POUPON, Christophe, F-76930 Octeville Sur Mer (FR)
(74) Mandataire: Thibaudeau, David A. C. R.
(86) Numéro de dépôt international: PCT/EP2007/058401
(87) Numéro de publication internationale: WO 2008/022943

(56) Documents cités:
- EP-A- 0 613 838
- US-A1- 3 970 189
- US-A1- 4 892 181

## Description

L'invention concerne un procédé de régulation d'un flux de produits selon le préambule de la revendication 1 et un agencement selon le préambule de la revendication 6 pour la mise en oeuvre d'un tel procédé.

L'invention concerne plus particulièrement un procédé de régulation pour ordonner un flux de produits comportant au moins une première file de produits et une deuxième file de produits, parallèle à la première file, qui sont transportés longitudinalement sur un tapis de convoyage à une vitesse de défilement, depuis une zone d'arrivée amont vers une zone de sortie aval, pour alimenter un dispositif de transfert à alvéoles, dit collecteur, de manière à mettre en phase les espacements entre les produits selon une séquence déterminée en fonction du dispositif de transfert.

L'invention concerne aussi un agencement, en particulier pour la mise en oeuvre d'un tel procédé de régulation, du type comportant un flux de produits constitué par au moins une première file de produits et une deuxième file de produits, parallèle à la première file, qui sont transportés longitudinalement sur un tapis de convoyage, à une vitesse de défilement, depuis une zone d'arrivée amont vers une zone de sortie aval, dans lequel le flux de produits est destiné à alimenter un dispositif de transfert à alvéoles, dit collecteur, agencé en aval de la zone de sortie du tapis, de manière à présenter respectivement en vis-à-vis de chacune desdites première et deuxième files une alvéole vide associée destinée à contenir au moins un produit.

On connaît de nombreux procédés de régulation d'un flux de produits et d'agencement dans lesquels de tels procédés de régulation sont susceptibles d'être mis en oeuvre.

Ce type de procédé et d'agencement sont notamment utilisés dans des installations pour le conditionnement de produits, par exemple dans des installations comportant une ligne de convoyage qui achemine les produits jusqu'à une machine d'encaissage, la machine d'encaissage empilant des produits, généralement des lots de produits, dans des caisses ou cartons d'emballage.

La ligne de convoyage comporte généralement, en amont de la machine d'encaissage, un tapis de convoyage qui transporte les produits sur une ou plusieurs files, avec un espacement déterminé entre deux produits consécutifs, jusqu'à un dispositif de transfert par exemple un collecteur comportant une série d'alvéoles de transport mobiles.

Le collecteur, parfois appelé aussi regroupeur, présente, en regard de chacune des files du tapis, au moins une alvéole vide associée prévue pour recevoir un produit ou un lot de produits.

Le document EP-A-0613838 décrit un procédé selon le préambule de la revendication 1 et un agencement selon le préambule de la revendication 6.

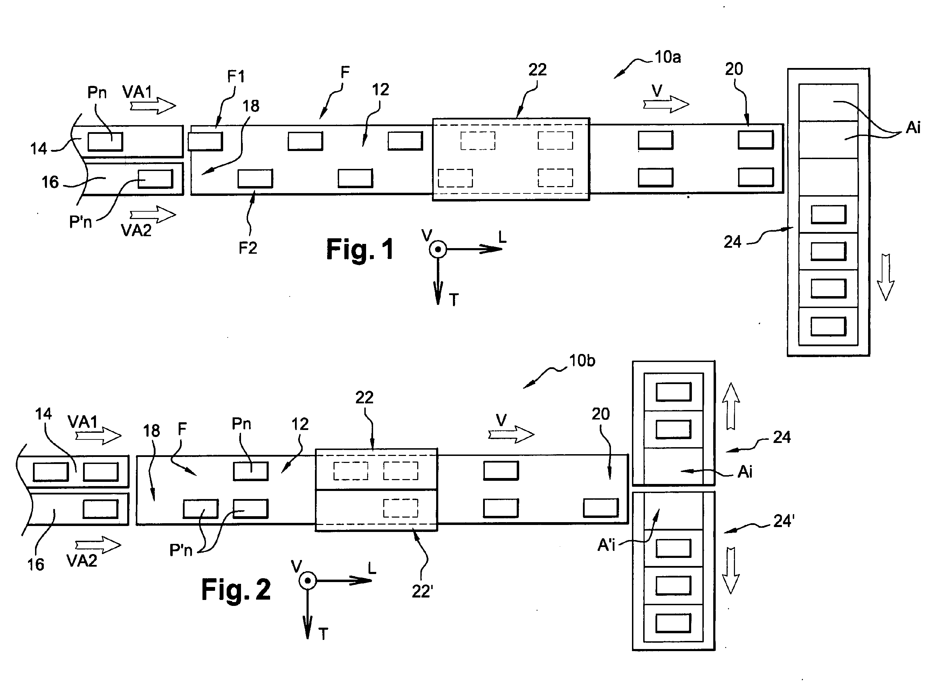

On a représenté aux figures 1 et 2, un premier et un deuxième exemples d'agencement 10a et 10b selon l'état de la technique.

De manière connue, l'agencement 10a, 10b comporte un tapis de convoyage 12 destiné à transporter un flux F de produits Pn, P'n constitué par au moins une première file F1 de produits Pn et une deuxième file F2 de produits P'n, qui est parallèle à la première file F1.

Le flux de produits Pn, P'n, est acheminé par un dispositif d'alimentation amont comportant un premier tapis d'alimentation 14 et un deuxième tapis d'alimentation 16 jusqu'à une zone d'arrivée amont 18 du tapis de convoyage 12.

En amont du tapis 12, les produits Pn de la première file F1 sont transportés par le premier tapis d'alimentation 14 tandis que les produits P'n sont transportés par le deuxième tapis 16, de manière que les produits Pn de la première file F1 et les produits P'n de la deuxième file F2 arrivent dans la zone d'arrivée 18 avec respectivement une vitesse d'alimentation VA1 et une vitesse d'alimentation VA2.

Le tapis de convoyage 12 transporte ensuite longitudinalement les produits Pn et P'n à une vitesse de défilement V déterminée, de la zone d'arrivée amont 18 jusqu'à une zone de sortie aval 20, entre lesquelles sont disposés des moyens de régulation 22 de manière à alimenter au moins un dispositif de transfert 24, ci-après le collecteur, comportant une série d'alvéoles Ai.

Les alvéoles Ai du collecteur 24 se décalent ainsi progressivement pour permettre par exemple d'acheminer les produits jusqu'à une machine d'encaissage (non représentée) et déterminent une cadence maximale de traitement au delà de laquelle le collecteur 24 n'est plus en mesure de collecter les produits provenant du tapis 12.

Ainsi, en considérant le collecteur 24 représenté à la figure 1, on comprendra que le remplissage simultané de deux alvéoles associées à deux files parallèles de produits permet, par comparaison avec un remplissage d'une seule alvéole, de doubler la capacité du nombre de produits traités par unités de temps.

Néanmoins pour garantir le bon fonctionnement d'un tel dispositif de transfert 24, il est nécessaire que l'espacement longitudinal entre les produits successifs soit suffisant pour permettre au collecteur 24 de se déplacer simultanément d'au moins deux crans, c'est à dire pour décaler transversalement vers le bas, après leur remplissage, deux alvéoles Ai, Ai+1 afin de présenter de nouveau deux alvéoles vides en regard des première et deuxième files de produits du tapis 12.

C'est la raison pour laquelle, il est connu de disposer en amont du collecteur 24 des moyens de régulation 22 des produits, encore appelé généralement "phaseur".

De tels moyens de régulation 22 sont par exemple susceptibles de constituer des lots de deux produits Pn, P'n avec un espacement ou écartement entre chaque lot Li de produits permettant au collecteur 24 de disposer d'un laps de temps T nécessaire au décalage de deux alvéoles entre deux lots de produits successifs défilant à la vitesse V sur le tapis 12.

Les moyens de régulation 22 selon l'état de la technique sont par exemple constitués par un phaseur pourvu d'un dispositif d'aspiration qui est agencé entre les zones d'arrivée 18 et de sortie 20 du tapis 12 de manière à immobiliser temporairement les produits des première et deuxième files F1 et F2 pour assurer un espacement entre chaque lot de deux produits Pn, P'n qui soit suffisant pour permettre au collecteur 24 de se décaler de deux alvéoles Ai, Ai+1.

L'agencement 10a représenté à la figure 1 illustre un premier exemple d'une application dans laquelle la vitesse d'alimentation VA1 du premier tapis d'alimentation 14 comportant les produits Pn formant la première file F1 est sensiblement égale à la vitesse d'alimentation VA2 du second tapis 16 comportant les produits P'n formant la deuxième file F2.

Pour une telle application, la séquence de répartition des produits Pn et P'n de chaque file F1, F2 la plus défavorable correspond à une opposition de phase entre les produits Pn, P'n de chacune des files F1, F2.

On a représenté sur le tronçon du tapis 12 situé en amont du phaseur 22 une telle séquence correspondant à une disposition des produits Pn de la première file F1 en quinconce par rapport aux produits P'n de la deuxième file F2, à raison ici d'un produit sur deux.

On comprendra dès lors qu'avec un tel déphasage entre les produits Pn de la première file F1 et les produits P'n de la deuxième file F2, le collecteur 24 ne dispose pas du laps de temps T nécessaire pour décaler successivement les alvéoles Ai avant l'arrivée du produit suivant.

C'est la raison pour laquelle, les produits Pn, P'n sont temporairement arrêtés par le phaseur 22 en amont du collecteur 24.

Si un tel phaseur 22 à dispositif d'aspiration est susceptible de donner satisfaction pour certaines applications, il présente toutefois des inconvénients.

En effet, ce type de phaseur ne permet pas d'une part de traiter des produits à très haute cadence, par exemple à des cadences de plus de 900 produits par minute et, d'autre part, de traiter certains types de produits, notamment ceux n'offrant pas une surface de contact appropriée, ce qui en limite singulièrement le champ d'application.

On a représenté à la figure 2 un deuxième exemple d'agencement 10b qui sera décrit ci-après par comparaison avec celui de la figure 1.

Ce deuxième exemple correspond au cas d'une application dans laquelle la vitesse d'alimentation VA1 du premier tapis d'alimentation 14 comportant les produits Pn formant la première file F1 est différente de la vitesse d'alimentation VA2 du second tapis 16 comportant les produits P'n formant la deuxième file F2.

Une telle application correspond au cas d'une installation de conditionnement dont l'alimentation en produits Pn, P'n du tapis 12 provient, en amont, de deux sources distinctes comportant chacune leur propre tapis d'alimentation 14, 16 dont le fonctionnement est indépendant.

Dans une telle application, il n'est pas possible d'utiliser un phaseur 22 comportant un dispositif d'aspiration du type de celui décrit précédemment afin d'alimenter un collecteur 24 fonctionnant selon un décalage simultané de deux alvéoles, chacune étant associée à l'une des files F1, F2.

En effet, la position sur le tapis des produits Pn de la première file F1 et des produits P'n de la deuxième file F2 sont alors soumis à des phénomènes aléatoires et les espacements entre les produits sont variables, tant au sein d'une même file que d'une file à l'autre.

Comme l'illustre la séquence de produits de la figure 2, il est en particulier possible qu'un seul produit ou deux produits se présentent pour remplir les alvéoles Ai avec une distance, dite "espacement", respectivement trop courte pour permettre d'obtenir un fonctionnement fiable et optimal du collecteur 24.

C'est la raison pour laquelle, pour une telle application, une solution consiste à associer un collecteur 24, 24' à chacune des première et deuxième files F1, F2 qui sont chacune traitées au moyen d'un phaseur 22, 22' pour ordonner les produits Pn ou P'n avec un espacement donné correspondant au laps de temps T minimum nécessaire au collecteur 24, 24' pour procéder à un décalage d'une alvéole, cran par cran.

Par conséquent, une telle solution est coûteuse notamment en raison du dédoublement des moyens de transfert et elle ne donne de surcroît pas satisfaction en raison de l'impossibilité d'atteindre un traitement des produits à haute cadence.

L'invention vise notamment à remédier à ces inconvénients en proposant une solution simple, économique et efficace permettant de plus d'atteindre de haute cadence.

Dans ce but l'invention propose un procédé de régulation du type décrit précédemment, **caractérisé en ce qu**'il comporte au moins :
- une première étape de ralentissement qui, lorsque la valeur de l'espacement entre un premier produit donné appartenant à l'une des première et deuxième files et un second produit situé immédiatement en amont et appartenant à l'autre desdites files, est inférieure à une première valeur de consigne déterminée, dite premier pas, consiste à ralentir, sur le tapis, ledit premier produit par rapport au second produit sans modifier la vitesse de défilement du tapis, jusqu'à ce que l'espacement entre ledit premier produit de la première ou deuxième file et le second produit associé de l'autre file atteigne une première valeur prédéterminée sensiblement nulle pour laquelle les premier et second produits sont globalement alignés selon la direction transversale ; et
- une deuxième étape de ralentissement qui, lorsque la valeur de l'espacement entre un produit aval de la première file et le produit proximal situé immédiatement en amont sur la deuxième file, est inférieure à une deuxième valeur de consigne déterminée, dite second pas, consiste à ralentir ledit produit proximal par rapport au produit situé en aval sur la première file jusqu'à ce que l'espacement entre le produit proximal de la deuxième file et le produit de la première file atteigne une valeur prédéterminée non nulle correspondant au moins à la deuxième valeur de consigne du second pas,
lesdites première étape de ralentissement et deuxième étape de ralentissement étant respectivement mises en oeuvre sélectivement de manière à mettre en phase l'espacement entre deux produits consécutifs appartenant respectivement à l'une et l'autre des première et deuxième files selon une séquence déterminée en fonction du dispositif de transfert à alvéoles.

Selon d'autres caractéristiques du procédé de régulation selon l'invention, pour une vitesse de défilement donnée du tapis, la valeur du premier pas est déterminée de manière que le dispositif de transfert dispose du laps de temps minimum nécessaire pour décaler transversalement une alvéole et la valeur du second pas est déterminée de manière que le dispositif de transfert dispose du laps de temps minimum nécessaire pour décaler transversalement deux alvéoles simultanément.

Avantageusement, le procédé de régulation comporte :
- une première étape préliminaire de contrôle, précédant la première étape de ralentissement, de manière à déterminer si la valeur de l'espacement entre un premier produit donné appartenant à l'une des files et un second produit situé immédiatement en amont et appartenant à l'autre desdites files est inférieure à la première valeur de consigne déterminée du premier pas ; et
- une deuxième étape préliminaire de contrôle, précédant la deuxième étape de ralentissement, de manière à déterminer si la valeur de l'espacement entre un produit aval de la première file et le produit proximal situé immédiatement en amont sur la deuxième file est inférieure à une deuxième valeur de consigne déterminée du second pas.

Avantageusement, le procédé comporte aussi :
- une première étape intermédiaire de lâcher succédant à la première étape de ralentissement au cours de laquelle des premiers moyens de régulation relâchent les premier et second produits globalement alignés selon la direction transversale de manière que les premier et second produits se déplacent à la vitesse de défilement du tapis vers des seconds moyens de régulation situés en aval des premiers moyens de régulation ; et
- une deuxième étape intermédiaire de lâcher, succédant à la deuxième étape de ralentissement, au cours de laquelle les seconds moyens de régulation relâchent le produit proximal ralenti de la deuxième file avec un espacement par rapport au produit aval de la première file le précédant au moins égal au deuxième pas et que ledit produit proximal poursuive son déplacement vers l'aval à la vitesse de défilement du tapis en direction du dispositif de transfert à alvéoles.

Le procédé de régulation comporte encore :
- une étape finale de détection au cours de laquelle des moyens de détection, agencés en amont du dispositif de transfert, détectent la présence des produits sur l'une et/ou l'autre des première et deuxième files de manière à commander sélectivement, après remplissage, le dispositif de transfert pour décaler d'une alvéole ou de deux alvéoles remplies et de manière à présenter respectivement une ou deux alvéoles vides pour collecter le ou les produits suivants.

L'invention concerne aussi un agencement du type décrit précédemment, **caractérisé en ce qu**'il comporte, entre la zone d'arrivée et la zone de sortie du tapis :
- des premiers moyens de régulation, dits premier phaseur, qui, lorsque la valeur de l'espacement entre un premier produit donné appartenant à l'une des première et deuxième files et un second produit situé immédiatement en amont et appartenant à l'autre desdites files, est inférieure à une première valeur de consigne déterminée, dite premier pas, sont aptes à ralentir sélectivement sur le tapis ledit premier produit par rapport au second produit, sans modifier la vitesse de défilement du tapis, jusqu'à ce que l'espacement entre ledit premier produit de la file et le second produit associé de l'autre file atteigne une première valeur prédéterminée sensiblement nulle pour laquelle les premier et second produits sont globalement alignés selon la direction transversale ; et
- des seconds moyens de régulation, dit second phaseur, agencé en aval des premiers moyens de régulation qui, lorsque la valeur de l'espacement entre un produit aval de la première file et le produit proximal situé immédiatement en amont sur la deuxième file, est inférieure à une deuxième valeur de consigne déterminée, dite second pas, sont aptes à ralentir sélectivement ledit produit proximal par rapport au produit situé en aval sur la première file jusqu'à ce que l'espacement entre le produit proximal et le produit aval atteigne une valeur prédéterminée non nulle correspondant au moins à la deuxième valeur de consigne du second pas.

Selon d'autres caractéristiques de l'agencement selon l'invention :
- le premier phaseur comporte au moins un taquet escamotable qui est commandé successivement entre :
   - au moins une position engagée dans laquelle le taquet s'interpose, par contact, devant un premier produit donné de l'une des files en vue de le ralentir jusqu'à ce qu'il soit rejoint par un second produit situé immédiatement en amont dans l'autre des files de manière que la valeur de l'espacement, initialement inférieure à la première valeur de consigne déterminée, dite premier pas, atteigne une première valeur prédéterminée sensiblement nulle pour laquelle lesdits premier et second produits sont globalement alignés selon la direction transversale, et
   - au moins une position escamotée qui permet de laisser lesdits premier et second produits alignés l'un à côté de l'autre poursuivre leur déplacement vers l'aval à la vitesse de défilement ;
- en position engagée, le taquet du premier phaseur est commandé en translation longitudinale vers l'aval, à une vitesse déterminée, dite de ralentissement, inférieure à la vitesse de défilement, jusqu'à ce que la valeur de l'espacement entre les premier et second produits soit sensiblement nulle ;
- le second phaseur comporte au moins un taquet escamotable qui est commandé successivement entre :
   - au moins une position engagée dans laquelle le taquet s'interpose, par contact, devant un produit proximal de la deuxième file en vue de le ralentir par rapport au produit situé immédiatement en aval sur la première file, jusqu'à ce que la valeur de l'espacement entre ledit produit proximal et le produit aval, initialement inférieure à la deuxième valeur de consigne déterminée, dite second pas, atteigne au moins une valeur prédéterminée non nulle correspondant au moins à la deuxième valeur de consigne du second pas ; et
   - au moins une position escamotée qui permet de laisser ledit produit proximal ralenti poursuivre son déplacement vers l'aval à la vitesse de défilement ;
- en position engagée, le taquet du second phaseur est commandé en translation longitudinale vers l'aval, à une vitesse déterminée dite de ralentissement, inférieure à la vitesse de défilement, jusqu'à ce que le produit proximal de la deuxième file ralenti soit espacé du produit situé en aval dans la première file, d'un espacement dont la valeur atteigne au moins la deuxième valeur de consigne du second pas ;
- le premier phaseur et le second phaseur comportent chacun au moins une courroie d'entraînement qui porte au moins un taquet et qui est agencée du côté de la face supérieure du tapis, la courroie est enroulée sur au moins deux poulies d'entraînement de manière qu'un brin inférieur de la courroie s'étende sensiblement parallèlement à la face supérieure du tapis, le taquet occupant des positions engagées lorsqu'il est situé sur le brin inférieur, et le phaseur comporte des moyens aptes à entraîner les poulies en rotation de manière que la vitesse longitudinale d'entraînement du taquet par la courroie soit respectivement égale à la vitesse de ralentissement pour le premier phaseur et à la vitesse de ralentissement pour le second phaseur ;
- la courroie du premier phaseur comporte un état de fonctionnement passif dans lequel elle est arrêtée, chaque taquet occupant une position escamotée d'attente, et un état de fonctionnement actif dans lequel la courroie est entraînée en rotation autour des poulies de manière qu'un taquet se déplace longitudinalement vers l'aval en position engagée, et la courroie est commandée dans son état actif lorsqu'au moins un capteur, agencé en amont du premier phaseur, détecte un second produit appartenant à l'une des files dont la valeur de l'espacement par rapport à un premier produit donné situé immédiatement en aval et appartenant à l'autre desdites filets est inférieure à la première valeur de consigne déterminée, dite premier pas ;
- le taquet du premier phaseur est commandé sélectivement depuis sa position escamotée d'attente vers sa position engagée lorsque la valeur de l'espacement entre un premier produit donné appartenant à l'une des files et un second produit situé immédiatement en amont et appartenant à l'autre desdites files est inférieure à une première valeur de consigne déterminée, dite premier pas ;
- la courroie du second phaseur comporte un état de fonctionnement passif dans lequel elle est arrêtée, chaque taquet occupant une position escamotée d'attente, et un état de fonctionnement actif dans lequel la courroie est entraînée en rotation autour des poulies de manière qu'un taquet se déplace longitudinalement vers l'aval en position engagée, et la courroie est commandée dans son état actif lorsqu'au moins un capteur, agencé en amont du second phaseur, détecte dans la deuxième file, un produit proximal dont la valeur de l'espacement par rapport au produit de la première file situé immédiatement en aval est inférieure à la deuxième valeur de consigne déterminée, dite second pas ;
- le taquet du second phaseur est commandé sélectivement depuis sa position escamotée d'attente vers sa position engagée lorsque la valeur de l'espacement entre un produit aval de la première file et le produit proximal situé immédiatement en amont sur la deuxième file, est inférieure à une deuxième valeur de consigne déterminée, dite second pas.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues de dessus d'un agencement selon une première conception et une deuxième conception connues de l'état de la technique ;
- les figures 3 et 4 sont respectivement des vues de côté et de dessus d'un agencement comportant des premiers et des seconds moyens de régulation destinés à la mise en oeuvre du procédé de régulation selon l'invention ;
- les figures 5A et 5B sont respectivement une vue de côté et une vue de dessus qui représentent schématiquement le premier phaseur de la figure 3 ou 4 lorsque la courroie est à l'état passif ;
- les figures 6A et 6B sont des vues similaires aux précédentes qui représentent le premier phaseur lorsque la courroie est à l'état actif et qui illustrent le début de l'engagement d'un taquet avec un produit pour constituer un lot de deux produits lorsque l'espacement est inférieur au premier pas ;
- les figures 7A et 7B sont des vues similaires aux précédentes qui représentent le premier phaseur lorsque la courroie est à l'état actif juste avant que les produits soient lâchés ;
- les figures 8A et 8B sont des vues similaires aux précédentes qui représentent le premier phaseur lorsque la courroie est à l'état passif juste après que les produits aient été lâchés et juste avant l'engagement d'un taquet avec un nouveau produit ;
- les figures 9A et 9B sont respectivement une vue de côté et une vue de dessus qui représentent schématiquement le second phaseur de la figure 3 ou 4 lorsque la courroie est à l'état passif ;
- les figures 10A et 10B sont des vues similaires aux précédentes qui représentent le second phaseur lorsque la courroie est à l'état actif et qui illustrent le début de l'engagement d'un taquet avec un produit de la deuxième file pour l'écarter du produit le précédent d'un espacement au moins égal au deuxième pas ;
- les figures 11A et 11B sont des vues similaires aux précédentes qui représentent le second phaseur lorsque la courroie est à l'état actif, juste avant que le produit proximal ralenti soit lâché ;
- les figures 12A et 12B sont des vues similaires aux précédentes qui représentent le second phaseur lorsque la courroie est à l'état passif, juste après que le produit proximal ralenti ait été lâché et juste avant l'engagement d'un taquet avec un nouveau produit proximale dont l'espacement avec le produit aval est inférieur au second pas ;
- la figure 13 est une vue de dessus d'un exemple d'un flux de produits selon une séquence donnée avant son traitement par le premier phaseur ;
- la figure 14 est une vue de dessus du flux de produits selon la figure 13 qui illustre le ralentissement de certains produits réalisé sélectivement par le premier phaseur ;
- la figure 15 est une vue de dessus du flux de produits selon la figure 14 après traitement par le premier phaseur et avant le traitement par le second phaseur ;
- la figure 16 est une vue de dessus du flux de produits selon la figure 15 qui illustre le ralentissement de certains produits de la deuxième file réalisé sélectivement par le second phaseur.

Pour la description de l'invention, on adoptera à titre non limitatif afin d'en faciliter la compréhension, les orientations longitudinale, verticale et transversale selon le repère L, V, T indiqué aux figures.

Dans la description qui va suivre, des éléments identiques, similaires ou analogues seront désignés par les mêmes chiffres de référence.

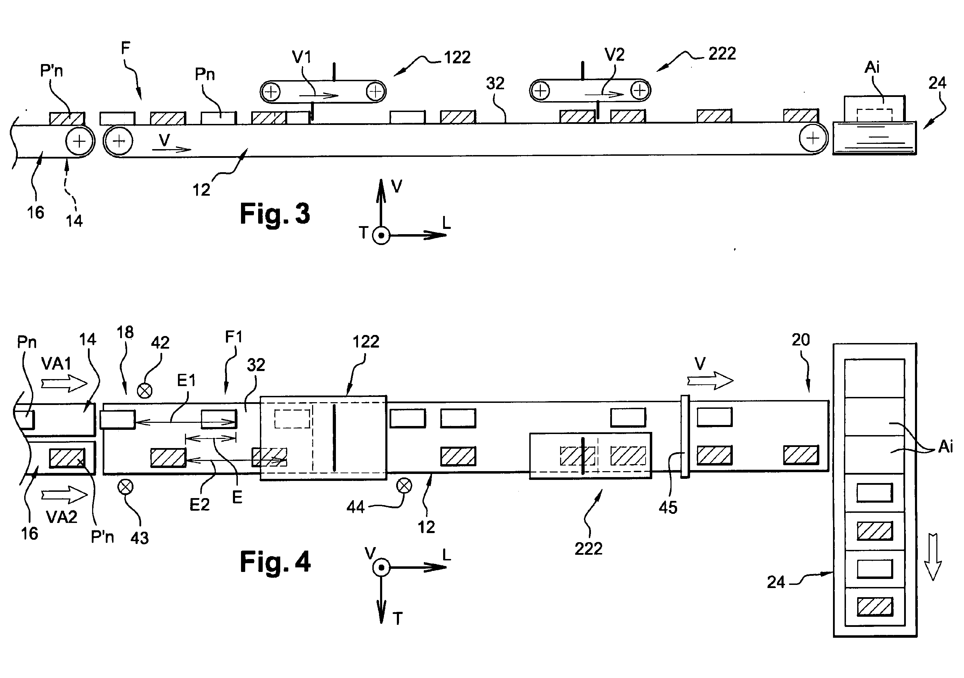

Sur les figures 3 et 4, on a représenté schématiquement un agencement 10, globalement similaire à celui 10a et 10b des figures 1 et 2.

L'agencement 10 comporte un tapis 12 de convoyage qui défile suivant une direction longitudinale orientée de l'amont vers l'aval, ce qui correspond à une orientation générale de la gauche vers la droite sur les figures 3 et 4.

L'agencement 10 comporte, en amont du tapis 12, un dispositif d'alimentation en produits comportant un premier tapis d'alimentation 14 et un second tapis d'alimentation 16 qui sont destinés à amener un flux F de produits, lequel est destiné à être ensuite transporté par le tapis de convoyage 12.

Le tapis 12 achemine le flux F de produits de l'amont vers l'aval, à une vitesse de défilement V déterminée, depuis une zone d'arrivée 18 jusqu'à une zone de sortie 20, pour alimenter un dispositif de transfert 24, dit collecteur, comportant des alvéoles Ai qui forment un train d'alvéoles.

Le flux F de produits est respectivement constitué d'une première file F1 comportant des produits Pn et d'une deuxième file F2 comportant des produits P'n, la deuxième file F2 s'étendant parallèlement à la première file F1 selon la direction longitudinale.

Les produits Pn de la première file F1 sont amenés jusqu'à la zone d'arrivée 18 du tapis de convoyage 12 par le premier tapis 14 avec une vitesse d'alimentation VA1 tandis les produits P'n de la deuxième file F2 sont amenés par le deuxième tapis 16 avec une vitesse d'alimentation VA2 qui est par exemple ici différente de la vitesse d'alimentation VA1 des produits Pn de la première file F1.

Par conséquent, comme cela a été expliqué précédemment (figure 2), le flux F de produits est dans un tel cas susceptible d'être désordonné, particulièrement les espacements entre les produits Pn de la première file F1 et les produits P'n de la deuxième file F2 qui sont variables et leurs positions respectives soumis à des phénomènes aléatoires.

Par définition, un "espacement" correspond dans la suite de la présente description à la distance longitudinale comprise entre l'extrémité aval d'un premier produit Pn ou Pn+1 appartenant ici respectivement à une première file F1 ou une deuxième file F2 donnée et l'extrémité aval d'un second produit Pn ou Pn+1 situé immédiatement en amont du premier produit Pn, Pn+1 appartenant soit à la même file F1, F2, soit à l'autre file parallèle à celle comportant le premier produit Pn ou Pn+1.

Comme on peut le voir sur les figures 3 et 4, les produits Pn, P'n sont disposés sur la surface horizontale supérieure 32 du tapis 12, les espacement entre les produits d'une même file F1, F2 sont variables et les première et deuxième files F1, F2 sont déphasées l'une par rapport à l'autre, c'est-à-dire que les produits Pn, P'n sont décalés longitudinalement entre eux d'une file à l'autre.

Sur les figures, les produits P'n de la deuxième file F2 ont été hachurés afin de permettre de les différencier des produits Pn de la première file F1.

Toutefois, les produits Pn et les produits P'n, ici représentés schématiquement par des boîtes parallélépipédiques, sont de préférence des produits identiques qui ne diffèrent donc que par celle des files à laquelle ils appartiennent.

Par définition, l'espacement E1 correspond dans la première file F1 à l'écartement selon la direction longitudinale entre deux produits Pn successifs, soit la distance entre la face aval d'un produit Pn et la face aval du produit Pn+1 situé immédiatement en amont.

De manière analogue, l'espacement E2 est défini par rapport à la deuxième file F2 comme étant l'écartement selon la direction longitudinale entre deux produits P'n successifs, soit la distance entre la face aval d'un produit P'n et la face aval du produit P'n+1 situé immédiatement en amont.

Les première et deuxième files F1, F2 étant déphasées l'une par rapport à l'autre, on définit encore un espacement E qui correspond l'écartement selon la direction longitudinale entre les faces aval de deux produits Pn, P'n successifs appartenant chacun à l'une des files F1, F2, soit par exemple la distance entre la face aval d'un produit Pn de la première file F1 et la face aval du produit P'n de la deuxième file F2 situé immédiatement en amont dudit produit Pn dans le flux F de produits.

Le dispositif de transfert ou collecteur 24 est agencé en aval de la zone de sortie 20 du tapis 12 de manière à présenter respectivement en vis-à-vis de chacune desdites première et deuxième files F1, F2, une alvéole Ai vide associée et destinée à contenir ici un produit Pn ou un produit P'n.

Pour un collecteur 24 donné, on détermine un premier laps de temps T1 correspondant au temps minimum nécessaire pour procéder à un décalage d'une alvéole Ai et un deuxième laps de temps T2 correspondant au temps minimum nécessaire pour réaliser simultanément un décalage de deux alvéoles Ai, le laps de temps T2 étant généralement sensiblement égal au double du laps de temps T1.

La vitesse de défilement V du tapis 12 transportant les produits Pn de la première file F1 et les produits P'n de la deuxième file F2 étant constante et sa valeur connue, on détermine alors une première valeur de consigne PAS1, dite premier pas, et une deuxième valeur de consigne PAS2, dite second pas.

Avantageusement, pour une vitesse de défilement V donnée du tapis 12, la valeur du premier pas PAS1 est déterminée de manière que le dispositif de transfert 24 dispose du laps de temps minimum T1 nécessaire pour décaler transversalement une alvéole Ai et la valeur du second pas PAS2 est déterminée de manière que le dispositif de transfert 24 dispose du laps de temps minimum T2 nécessaire pour décaler transversalement deux alvéoles Ai, Ai+1 simultanément.

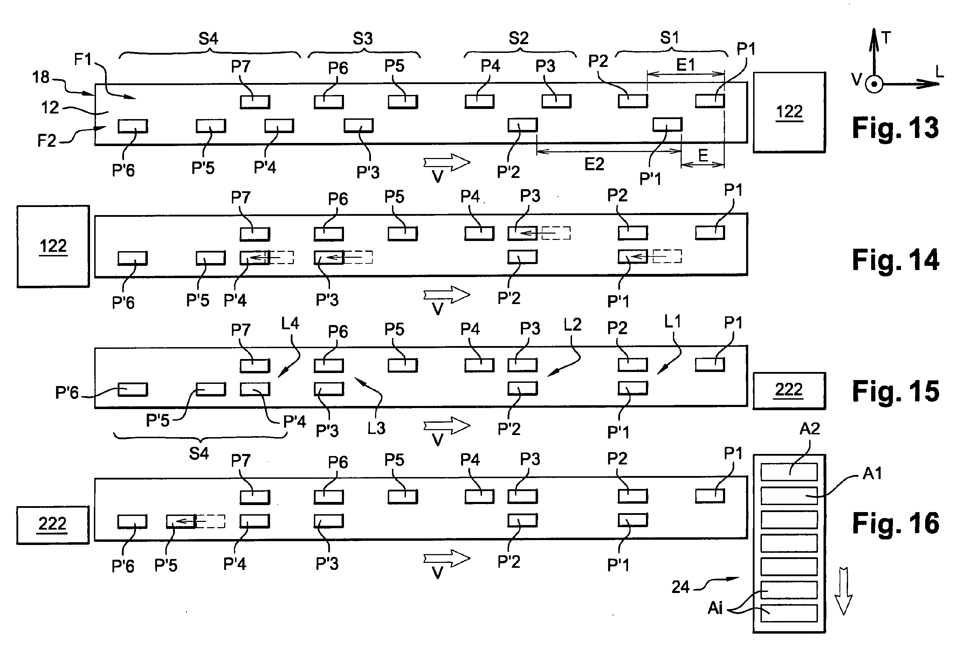

On a représenté à la figure 13, un exemple de flux F de produits défilant sur le tapis 12 et comportant une première séquence S1 constituée par un premier produit P1 et un deuxième produit P2 appartenant à la première file F1 d'une part, et par un premier produit P'1 appartenant à la deuxième file F2, le produit P'1 étant positionné longitudinalement entre le premier produit P1 et le deuxième produit P2.

La valeur de l'espacement E entre le produit P'1 de la deuxième file F2 et le produit P2 de la première file F1 est dans cette première séquence S1 inférieure à ladite première valeur de consigne PAS1 ou premier pas.

La valeur de l'espacement E1 entre le produit P1 et le produit P2 de la première file F1 est en revanche supérieure ou égale à la deuxième valeur de consigne PAS2, dite second pas.

Si une telle séquence S1 parvenait directement jusqu'aux alvéoles Ai du collecteur 24, le premier produit P1 de la première file F1 pénétrerait alors dans l'alvéole A1 située en vis-à-vis puis le premier produit P'1 rentrerait en collision avec le collecteur 24 avant que ce dernier n'ait pu procéder au décalage requis pour que le produit P'1 soit reçu dans l'alvéole A2 suivante.

En effet, le premier produit P1 appartenant à la première file F1 et le produit P'1 suivant à la deuxième file F2, le collecteur 24 doit dans ce cas pouvoir réaliser un décalage simultané de deux alvéoles pour présenter une alvéole A2 vide en vis-à-vis de la deuxième file F2.

Or, l'espacement entre les produits P1 et P'1 n'est pas suffisant pour que le collecteur 24 dispose du laps de temps T2 nécessaire à un tel décalage de deux alvéoles Ai, Ai+1.

De plus, en supposant que le premier produit P'1 ait pu être reçu dans l'alvéole A2, un autre incident surviendrait alors avec le produit P2 suivant car l'espacement entre le produit P'1 et le produit P2 étant inférieur au premier pas PAS1, le collecteur 24 ne dispose pas non plus du laps de temps T1 nécessaire pour décaler l'alvéole A2 remplie par P'1 et présenter deux nouvelles alvéoles A3 et A4 respectivement en vis à vis de la deuxième et de la première file F2, F1.

Pour résoudre ces problèmes, l'invention propose un procédé de régulation destiné à mettre en phase l'espacement entre deux produits Pn, P'n consécutifs appartenant à l'une et/ou l'autre des première et deuxième files F1, F2, selon une séquence PAS1, PAS2 qui est avantageusement déterminée, en fonction des caractéristiques du dispositif de transfert 24 à alvéoles, de manière que le collecteur 24 dispose du laps de temps T1 et/ou T2 nécessaire pour décaler sélectivement son train d'une ou deux alvéoles Ai, Ai+1 suivant la séquence de produits Pn, P'n.

Conformément à l'invention, le procédé de régulation est **caractérisé en ce qu**'il comporte au moins :
- une première étape de ralentissement qui, lorsque la valeur de l'espacement E entre un premier produit donné Pn, P'n, appartenant à l'une des files F1, F2 et un second produit Pn, P'n, situé immédiatement en amont et appartenant à l'autre desdites files F1, F2, est inférieure à une première valeur de consigne déterminée, dite premier pas PAS1, consiste à ralentir sur le tapis 12 ledit premier produit Pn, P'n, par rapport au second produit Pn, P'n, sans modifier la vitesse de défilement V du tapis 12, jusqu'à ce que l'espacement E entre ledit premier produit Pn, P'n de la file F1, F2 et le second produit associé Pn, P'n de l'autre file F1, F2 atteigne une première valeur prédéterminée sensiblement nulle pour laquelle les premier et second produits Pn, P'n sont globalement alignés selon la direction transversale ; et
- une deuxième étape de ralentissement qui, lorsque la valeur de l'espacement E entre un produit aval Pn de la première file F1 et le produit proximal P'n situé immédiatement en amont sur la deuxième file F2, est inférieure à une deuxième valeur de consigne déterminée, dite second pas PAS2, consiste à ralentir ledit produit proximal P'n par rapport au produit Pn situé en aval sur la première file F1 jusqu'à ce que l'espacement E entre le produit proximal P'n de la deuxième file F2 et le produit Pn de la première file F1 atteigne une valeur prédéterminée non nulle correspondant au moins à la deuxième valeur de consigne PAS2 du second pas.

La première étape de ralentissement et la deuxième étape de ralentissement selon l'invention sont respectivement mises en oeuvre sélectivement de manière à mettre en phase l'espacement E entre deux produits Pn et P'n consécutifs appartenant respectivement à l'une et l'autre des première et deuxième files F1, F2 selon une séquence PAS1, PAS2 qui est déterminée en fonction du dispositif de transfert 24 à alvéoles Ai.

Avantageusement, la première étape de ralentissement et la deuxième étape de ralentissement sont réalisées successivement l'une après l'autre.

Avantageusement, pour une vitesse de défilement V donnée du tapis 12, la valeur du premier pas PAS1 est déterminée de manière que le dispositif de transfert 24 dispose du laps de temps minimum T1 nécessaire pour décaler transversalement une alvéole Ai et la valeur du second pas PAS2 est déterminée de manière que le dispositif de transfert 24 dispose du laps de temps minimum T2 nécessaire pour décaler transversalement deux alvéoles Ai, Ai+1 simultanément.

Avantageusement, le procédé de régulation comporte :
- une première étape préliminaire de contrôle, précédant la première étape de ralentissement, de manière à déterminer si la valeur de l'espacement E entre un premier produit donné Pn, P'n, appartenant à l'une des files F1, F2 et un second produit Pn, P'n, situé immédiatement en amont et appartenant à l'autre desdites files F1, F2, est inférieure à une première valeur de consigne déterminée PAS1 du premier pas ; et
- une deuxième étape préliminaire de contrôle, précédant la deuxième étape de ralentissement, de manière à déterminer si la valeur de l'espacement E entre un produit aval Pn de la première file F1 et le produit proximal P'n situé immédiatement en amont sur la deuxième file F2 est inférieure à une deuxième valeur de consigne déterminée PAS2 du second pas.

L'invention propose aussi un agencement 10 comportant des premiers moyens de régulation, dits premier phaseur 122, et des seconds moyens de régulation, dits second phaseur 222, destinés à la mise en oeuvre du procédé de régulation.

Le premier phaseur 122 et le second phaseur 222 sont agencés entre la zone d'arrivée 18 et la zone de sortie 20 du tapis 12, le second phaseur 222 étant disposé en aval du premier phaseur 122.

Avantageusement, le premier phaseur 122 et le second phaseur 222 sont susceptibles d'être commandés chacun sélectivement, conformément au procédé de régulation selon l'invention.

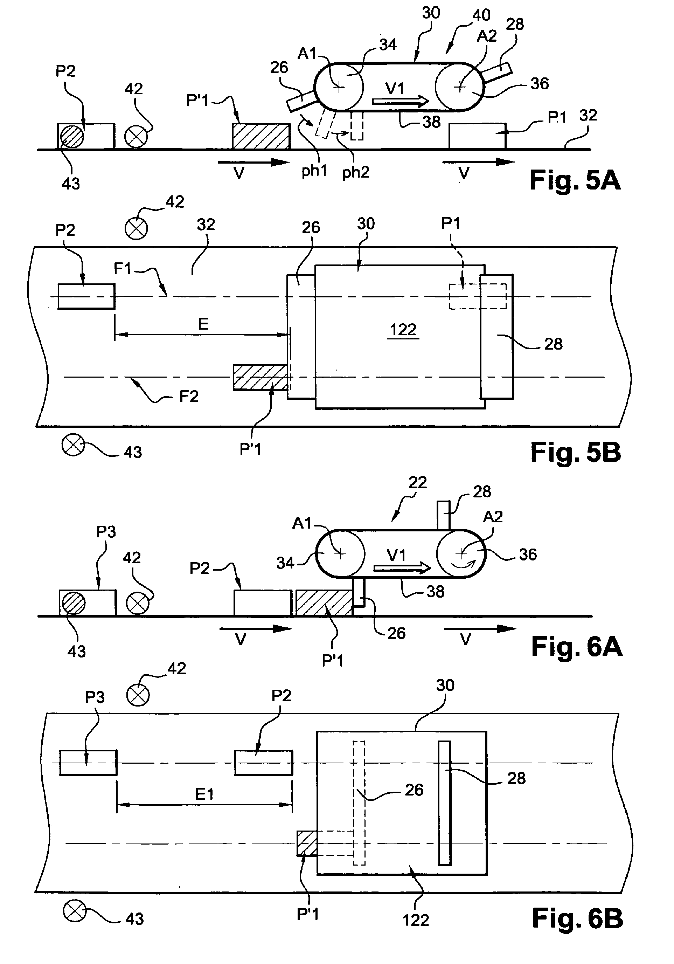

On décrira ci-après les figures 5 à 8 qui représentent en détail le fonctionnement du premier phaseur 122 formant les premiers moyens de régulation dans le cas du traitement de la première séquence S1 du flux F décrite précédemment et représentée à la figure 13.

Le premier phaseur 122 est apte à ralentir sur le tapis 12 un premier produit Pn, P'n, par rapport à un second produit Pn, P'n, sans modifier la vitesse de défilement V du tapis 12, jusqu'à ce que l'espacement E entre ledit premier produit Pn, P'n de la file F1, F2 et le second produit associé Pn, P'n de l'autre file F1, F2 atteigne une première valeur prédéterminée sensiblement nulle pour laquelle les premier et second produits Pn, P'n sont globalement alignés l'un à côté de l'autre selon la direction transversale.

Conformément au procédé de régulation selon l'invention, le premier phaseur 122 est commandé sélectivement pour réaliser la première étape de ralentissement lorsque la valeur de l'espacement E entre un premier produit donné Pn, P'n, appartenant à l'une des files F1, F2 et un second produit Pn, P'n, situé immédiatement en amont et appartenant à l'autre desdites files F1, F2, est inférieure à la première valeur de consigne déterminée, dite premier pas PAS1.

Avantageusement, le premier phaseur 122 comporte au moins un taquet 26, 28 escamotable qui est commandé successivement entre :
- au moins une position engagée dans laquelle le taquet 26, 28 s'interpose, par contact, ici devant un premier produit P'1 de la deuxième file F2 en vue de le ralentir jusqu'à ce qu'il soit rejoint par le second produit P2 situé immédiatement en amont dans la première file F1, de manière que la valeur de l'espacement E, initialement inférieure à la première valeur de consigne déterminée correspondant au premier pas PAS1, atteigne une première valeur prédéterminée sensiblement nulle pour laquelle lesdits premier et second produits P'1 et P2 sont globalement alignés selon la direction transversale, et
- au moins une position escamotée qui permet de laisser lesdits premier et second produits P'1 et P2 alignés l'un à côté de l'autre poursuivre leur déplacement vers l'aval à la vitesse V de défilement.

On remarquera que la première étape de ralentissement réalisée par le premier phaseur 122 aboutit au regroupement des premier et second produits P'1 et P2 sous la forme d'un lot Li de deux produits alignés l'un côté de l'autre sur un même rang d'orientation transversale.

On a représenté aux figures 5 à 8 un exemple de réalisation d'un premier phaseur 122 comportant de préférence un premier taquet 26 et un deuxième taquet 28.

Le premier phaseur 122 est positionné verticalement au dessus du tapis 12 et il est centré sur le tapis 12 par rapport à la première file F1 et à la deuxième file F2 de manière à être susceptible d'agir respectivement sur les produits Pn et les produits P'n que comporte chacune des files F1, F2.

Avantageusement, le premier phaseur 122 est monté mobile transversalement de manière à pouvoir en régler la position en fonction notamment de la distance transversale ou écartement entre la première file F1 de produits Pn et de la deuxième file F2 de produits P'n.

Le premier phaseur 122 comporte une courroie 30 qui est agencée du côté de la face supérieure 32 du tapis 12 et qui est susceptible d'entraîner en déplacement au moins un taquet, ici les deux taquets 26, 28.

En variante, le premier phaseur 122 comporte trois taquets ou plus selon les applications.

La courroie 30 est enroulée sur une poulie amont 34 et sur une poulie aval 36 d'axes A1 , A2 transversaux, par rapport à la direction longitudinale.

Les deux poulies 34, 36 sont ici agencées au-dessus du tapis 12 de manière que le brin inférieur 38 de la courroie 30 s'étende sensiblement parallèlement à la face supérieure 32 du tapis 12, et de manière que les taquets 26, 28 soient sensiblement centrés transversalement par rapport aux files F1 et F2 du tapis 12 et soient aptes à agir sur les produits Pn et les produits P'n des files F1 et F2 respectivement.

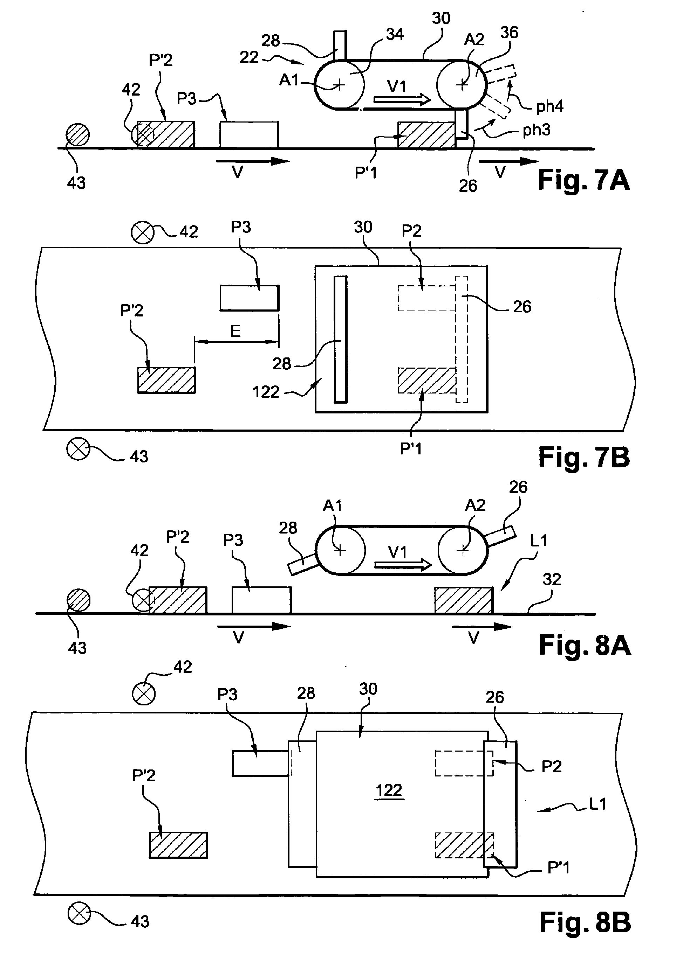

La poulie aval 36 est prévue pour être entraînée en rotation au moyen d'un servomoteur 40 de manière à entraîner la courroie 30 en rotation autour des poulies 34, 36, et de manière que le brin inférieur 38 se déplace dans le même sens que le tapis 12. A cet effet, la poulie aval 36 est entraînée en rotation dans le sens anti-horaire, en considérant les figures 6A et 7A.

La courroie 30 porte, sur sa face extérieure, le premier taquet 26 et le second taquet 28 qui, similaires, sont longitudinalement agencés à des positions sensiblement opposées le long de la courroie 30.

La mise en mouvement de la courroie 30 autour des poulies 34, 36 entraîne donc les taquets 26, 28 en déplacement.

Chaque taquet 26, 28 a ici globalement la forme d'une plaque transversale perpendiculaire à la portion de courroie 30 qui la porte.

En variante, la forme et les matériaux utilisés pour la fabrication des taquets 26, 28 sont susceptibles de varier notamment en fonction du type de produit traité.

La hauteur du brin inférieur 38 de la courroie 30 et/ou la hauteur de chaque taquet 26, 28, par rapport à la face supérieure 32 du tapis 12, est telle que, lorsqu'un taquet 26, 28 se situe sur le brin inférieur 38, il constitue un obstacle au passage des produits Pn de la première file F1 et/ou des produits P'n de la deuxième file F2, ce qui correspond à une position dite engagée du taquet 26, 28.

Lorsqu'un taquet 26, 28 occupe une position engagée, le taquet 26, 28 opposé occupe une position escamotée, ce qui est par exemple le cas sur les figures 6A et 7A où le premier taquet 26 occupe une position engagée et où le second taquet 28 occupe une position escamotée.

Les taquets 26, 28 peuvent aussi occuper des positions intermédiaires, représentées sur les figures 5A et 8A, lorsqu'ils se situent sur les portions enroulées de la courroie 30.

Sur la figure 5A, la position intermédiaire occupée par le premier taquet 26 est dite position d'attente amont et la position intermédiaire occupée par le second taquet 28 est dite position d'attente aval. Ces positions d'attente sont respectivement des positions escamotées.

En position d'attente amont, le premier taquet 26 est situé à hauteur de la poulie amont 34. Il est proche d'une position engagée mais suffisamment incliné vers l'amont pour ne pas gêner le passage des produits Pn de la première file F1 ou des produits P'n de la deuxième file F2 sous le brin inférieur 38 de la courroie 30.

En position d'attente aval, le second taquet 28 est situé à hauteur de la poulie aval 36 et il ne peut par conséquent interférer ou faire obstacle lors du passage des produits Pn et/ou des produits P'n sous le brin inférieur 38.

Sur la figure 8A, les deux taquets 26, 28 occupent des positions inversées par rapport à la figure 5A, le second taquet 28 occupant une position d'attente amont et le premier taquet 26 occupant une position d'attente aval.

Avantageusement, la courroie 30 est commandée successivement dans un état passif et dans un état actif.

Dans son état passif, qui est illustré par les figures 5A et 8A, la courroie 30 est arrêtée et les taquets 26, 28 occupent leurs positions d'attente.

Dans l'état actif de la courroie 30, qui est illustré par les figures 6A et 7A, le servomoteur 40 entraîne la courroie 30 en rotation autour des poulies 34, 36, ce qui provoque un déplacement longitudinal des taquets 26, 28 au dessus du tapis 12, à une vitesse dite de ralentissement V1 qui est inférieure à la vitesse de défilement V du tapis 12.

De préférence, la vitesse de ralentissement V1 est sensiblement constante et correspond à la vitesse longitudinale VL de déplacement des taquets 26, 28.

En considérant les figures 5A à 8A, le premier taquet 26 se déplace vers l'aval, depuis sa position d'attente amont jusqu'à sa position d'attente aval, et le second taquet 28 se déplace vers l'amont, depuis sa position d'attente aval jusqu'à sa position d'attente amont.

Au cours du déplacement du premier taquet 26 vers l'aval, celui-ci-occupe des positions engagées.

Avantageusement, la courroie 30 est commandée dans son état actif et dans son état passif en fonction des signaux émis par des moyens de détection qui sont agencés entre la zone d'arrivée 18 et le premier phaseur 122, par exemple par au moins un capteur ou codeur 42.

Le capteur 42 est ici susceptible de détecter de préférence les produits Pn de la première file F1.

En variante, le capteur 42 est susceptible de détecter le passage des produits Pn de la première file F1 et/ou des produits Pn+1 de la deuxième file F2, et est agencé au dessus de la surface 32 du tapis 12.

Le capteur 42 est, par exemple, constitué par une cellule électrique agencée au bord du tapis 12 qui est adjacent à la première file F1 ou au dessus de celle-ci et reliée électriquement au servomoteur 40, de sorte que la détection d'un produit déterminé, tel que le premier produit P1, produise un signal de détection qui est susceptible d'être d'exploité, notamment pour différentes fonctions détaillées ci-après.

Avantageusement, le signal de détection du capteur 42 est exploité pour contrôler sur la première file F1 l'espacement entre un produit aval Pn et un produit amont Pn+1 , c'est-à-dire pour déterminer la valeur de l'espacement E1.

Avantageusement, les moyens de détection de l'agencement 10 comporte d'autres moyens, tels qu'au moins un capteur et/ou un codeur 43, qui sont associés à la deuxième file F2 et qui sont notamment susceptibles de détecter l'arrivée des produits P'n de la deuxième file F2 sur le tapis 12.

De manière analogue, le capteur 43 est susceptible de produire un autre signal de détection qui est exploité pour contrôler sur la deuxième file F2 l'espacement entre un produit aval P'n et un produit amont P'n+1, c'est-à-dire pour déterminer la valeur de l'espacement E2.

Avantageusement, il est possible de déterminer par comparaison des signaux émis respectivement par les capteurs 42 et 43 des moyens de détection si la valeur de l'espacement E entre un produit Pn de la première file F1 et le produit P'n de la deuxième file F2 situé immédiatement en amont, et réciproquement entre un produit P'n de la deuxième file F2 et le produit Pn de la première file F1 situé immédiatement en amont, est inférieure à la première valeur de consigne déterminée, dite premier pas PAS1.

Grâce aux moyens de détection 42, 43, on réalise avantageusement la première étape préliminaire de contrôle, précédant la première étape de ralentissement, qui consiste à déterminer si la valeur de l'espacement E entre un premier produit donné Pn, P'n, appartenant à l'une des files F1, F2 et un second produit Pn, P'n, situé immédiatement en amont et appartenant à l'autre desdites files F1, F2, est inférieure à une première valeur de consigne déterminée PAS1 du premier pas.

Avantageusement, le premier et/ou le second signal de détection des moyens de détection 42, 43 sont aussi exploités en temps réel pour la commande sélective du phaseur 122, en particulier pour assurer le déclenchement synchrone du servomoteur 40 à l'instant adéquat.

Avantageusement, on synchronise la commande de l'entraînement de la courroie 30 du phaseur 122 avec la détection de produit Pn, Pn+1 de sorte que le premier phaseur 122 est susceptible de traiter les produits quelle que soit la valeur des espacements E1, E2 ou E.

Cette caractéristique de fonctionnement sélectif est particulièrement avantageuse pour permettre un fonctionnement fiable de l'agencement 10 selon l'invention à haute cadence, par exemple au-delà de 900 produits par minute et lorsque les tapis d'alimentation 14, 16 ont des vitesses VA1, VA2 différentes.

La vitesse de ralentissement V1 du premier phaseur 122 est déterminée, selon la séquence S1 représentée (figure 13), de manière que, le produit P'1 de la deuxième file F2 parcourant la distance longitudinale, dite de ralentissement, comprise entre les positions engagées amont et aval d'un taquet 26, 28, le produit P2 de la première file F1 parcoure simultanément à la vitesse de défilement V une distance longitudinale correspondant à la somme de ladite distance de ralentissement et de l'espacement amont E.

La distance de ralentissement correspond donc globalement à l'entraxe A1-A2 du phaseur 22 ou à la longueur du brin 38 de la courroie 30 de sorte que, outre la détermination de la vitesse de ralentissement V1, la distance de ralentissement est aussi susceptible d'être réglée en modifiant notamment la longueur de la courroie 30 avec un entraxe A1-A2 réglable ou la position relative des taquets 26, 28.

On décrira ci-après en détail le fonctionnement du premier phaseur 122.

Alors que la courroie 30 est dans un état passif où le premier taquet 26 occupe sa position d'attente amont (figure 5A), les capteurs 42, 43 détectent en amont l'arrivée des produits Pn, P'n et déterminent la valeur de l'espacement E.

Les moyens de détection 42, 43 sont avantageusement agencés en amont du premier phaseur 122, de préférence dès la zone d'arrivée 18.

Selon la première séquence S1, l'espacement E entre le produit P'1 de la deuxième file F2 et le produit P2 de la première file F1 est inférieur à la valeur du premier pas PAS1.

Dans le cas de la première séquence S1, le premier phaseur 122 va ralentir le produit P'1 formant le premier produit par rapport au produit P2 formant le second produit.

C'est par conséquent, le signal de détection émis par le capteur 43 qui est ici exploité pour provoquer, sélectivement et de manière synchrone par rapport au déplacement du produit P'1, la mise en marche du servomoteur 40 de sorte que la courroie 30 passe de son état passif à son état actif, et de sorte que le premier taquet 26 passe de sa position d'attente amont à sa position engagée, comme représenté sur les figures 5A et 6A.

Le premier taquet 26 est alors entraîné longitudinalement vers l'aval, à la vitesse de ralentissement V1.

Comme la vitesse de ralentissement V1 du premier taquet 26 est inférieure à la vitesse de défilement V du premier produit P'1, le produit P'1 rejoint le premier taquet 26 et vient en butée contre la face transversale amont de celui-ci, ce qui provoque un glissement du premier produit P'1 sur le tapis 12.

Le premier produit P'1 se déplace alors longitudinalement à la vitesse de ralentissement V1 imposée par le premier taquet 26, jusqu'à ce que le premier taquet 26 vienne occuper une position escamotée.

On note que, lors du passage de la courroie 30 de l'état passif à l'état actif, la mise en marche du servomoteur 40 comporte une phase préalable d'accélération ph1, qui permet à la courroie 30 de passer d'une vitesse longitudinale d'entraînement VL nulle à une vitesse longitudinale d'entraînement VL stabilisée égale à la vitesse de ralentissement V1.

De préférence, la position d'attente amont est choisie de manière que le premier taquet 26 atteigne une position intermédiaire d'engagement à la fin de la phase d'accélération ph1, avant qu'il ait atteint sa première position engagée verticale.

Sur la figure 5A, on a représenté en trait interrompu fin la position intermédiaire d'engagement et en trait interrompu fort la première position engagée verticale du premier taquet 26.

La phase de déplacement du premier taquet 26 entre la position intermédiaire d'engagement et la première position engagée verticale est dite phase d'engagement ph2.

L'instant de déclenchement du servomoteur 40 est par exemple calé par rapport au signal, ici celui du capteur 43, de manière que le premier produit P'1, arrivant à la vitesse V de défilement, vienne en contact de manière synchrone avec le premier taquet 26 pendant la phase d'engagement ph2.

Ainsi, lorsque le premier taquet 26 occupe sa première position engagée verticale, le premier produit P'1 est bloqué en appui contre le premier taquet 26, ce qui est illustré par la figure 6A.

Dès lors, bloqué en appui contre le premier taquet 26, le premier produit P'1 se déplace longitudinalement à la vitesse de ralentissement V1.

Comme le produit P2 de la première file F1 se déplace toujours sur le tapis 12 à la vitesse de défilement V, l'espacement amont E va progressivement diminuer jusqu'à atteindre une valeur nulle lorsque le produit P2 rejoint le premier produit P'1 pour se retrouver lui aussi bloqué en appui contre le premier taquet 26 et par conséquent alignés transversalement l'un à côté de l'autre sur un même rang.

Avantageusement, la vitesse de ralentissement V1 et l'entraxe A1-A2 entre les deux poulies 34, 36 sont donc choisis en fonction de la vitesse de défilement V et en fonction des valeurs maximales de l'espacement amont E entre les produits Pn de la première file F1 et les produits P'n de la deuxième file F2.

Le second produit P2 rejoint le premier produit P1 immédiatement avant que le premier taquet 26 passe de sa position engagée à sa position escamotée, c'est-à-dire globalement à hauteur de la poulie aval 36, ce qui est plus particulièrement illustré par la figure 7A.

Avantageusement, le basculement du taquet 26 vers sa position escamotée s'effectue lorsque, le produit P2 ayant rejoint le produit P'1, un premier lot L1 est formé.

Avantageusement pour chaque application, on détermine les caractéristiques du premier phaseur 122 de manière que les produits Pn, P'n ne puissent être libérés par le basculement du taquet 26 avant d'avoir été alignés transversalement l'un à côté de l'autre.

Plus précisément, la vitesse de ralentissement V1 et l'entraxe A1-A2 entre les poulies amont 34 et aval 36 sont déterminés par rapport à une cadence maximale souhaitée et de manière que l'espacement E, ici entre les deux produits P'1, P2, diminue sous le phaseur 122 jusqu'à atteindre systématiquement une valeur nulle.

Comme représenté sur la figure 8B, les produits P'1 et P2 sont regroupés transversalement l'un à côté de l'autre de manière former un rang et sont alignés selon une direction transversale de déplacement des alvéoles Ai du collecteur 24.

En arrivant à hauteur de la poulie aval 36, le premier taquet 26 s'escamote et vient occuper sa position d'attente aval, représentée sur la figure 8A. La courroie 30 passe alors de son état actif à son état passif.

Le basculement du premier taquet 26 d'une ultime position engagée verticale, qui est représentée en trait continu sur la figure 7A, à une position intermédiaire de dégagement, qui est représentée en trait interrompu fin sur la figure 7A, est appelé phase de dégagement ph3.

Le premier produit P'1 et le second produit P2 du lot L1 sont alors relâchés par le premier taquet 26 au cours de la phase de dégagement ph3, ce qui permet aux produits P'1, P2 de poursuivre leur course longitudinale vers l'aval à la vitesse de défilement V.

La fin de la phase de dégagement ph3 correspond au début d'une phase dite de décélération ph4, au cours de laquelle la vitesse longitudinale d'entraînement VL de la courroie 30 passe de la vitesse de ralentissement V1 à une vitesse nulle, et au cours de laquelle le premier taquet 26 passe de sa position intermédiaire de dégagement à sa position d'attente aval, qui est représentée en trait interrompu fort sur la figure 7A.

Le premier phaseur 122 réalise ainsi conformément au procédé selon l'invention une première étape intermédiaire de lâcher qui succède à la première étape de ralentissement et au cours de laquelle le taquet 26, 28 du premier phaseur 122 relâchent les premier et second produits Pn, P'n globalement alignés selon la direction transversale, ici les produits P'1 et P2 selon la première séquence S1, de manière que les produits Pn, P'n se déplacent de nouveau à la vitesse de défilement V du tapis 12 vers les seconds moyens de régulation formés par le second phaseur 222 situé en aval.

Le premier phaseur 122 a ainsi effectué un premier cycle complet correspondant au traitement de la première séquence S1.

Comme illustré par la figure 8A, le second taquet 28 occupant sa position d'attente amont, le premier phaseur 122 est alors prêt à ralentir un nouveau produit Pn ou P'n de l'une des files F1, F2 dont la valeur de l'espacement E par rapport au produit Pn ou P'n situé immédiatement en amont dans l'autre file F1, F2 serait inférieure à la valeur du premier pas PAS1.

En effet, après le traitement de la première séquence S1, le flux F de produits représenté à la figure 13 continue d'être transporté sur le tapis 12.

Sur la figure 13, on a scindé de manière arbitraire le flux F de produits Pn, P'n en différentes séquences successives afin de faciliter la description et la compréhension de l'invention.

Avantageusement, le taquet 26, 28 du premier phaseur 122 est commandé sélectivement depuis sa position escamotée d'attente vers sa position engagée lorsque la valeur de l'espacement E entre un premier produit donné Pn, P'n, appartenant à l'une des files F1, F2 et un second produit Pn, P'n, situé immédiatement en amont et appartenant à l'autre desdites files F1, F2, est inférieure à une première valeur de consigne déterminée, dite premier pas PAS1.

Tel sera le cas dans la deuxième séquence S2 de la figure 13 qui est constituée par un produit P3 et un produit P4 appartenant à la première file F1 et par une produit P'2 appartenant à la deuxième file F2.

En effet, grâce aux moyens de détection 42, 43, on détermine dans cette deuxième séquence que la valeur de l'espacement E entre le produit P3 de la première file F1 et le produit P'2 de la deuxième file F2 est inférieure à la valeur du premier pas PAS1.

Dès lors, le servomoteur 40 du premier phaseur 122 est commandé pour réaliser un second cycle analogue au premier cycle qui vient d'être décrit.

Au cours de ce second cycle, le deuxième taquet 28 va ralentir le produit P3 jusqu'à ce qu'il soit rejoint par le produit P'2 pour former un second lot L2 de produits alignés transversalement l'un à côté de l'autre.

On remarquera que, le premier phaseur 122 étant centré par rapport aux première et deuxième files F1, F2 et les taquets 26, 28 s'étendant transversalement de manière à pouvoir agir sur les produits Pn, P'n de l'une ou l'autre des files F1, F2, la première étape de ralentissement est susceptible d'être mise en oeuvre indifféremment que le premier produit Pn, P'n à ralentir appartiennent à la première file F1, comme le produit P3 de la deuxième séquence S2, ou encore qu'il appartienne à la deuxième file F2, comme le produit P'1 dans la première séquence S1.

La régulation du flux F par le premier phaseur 122 se poursuit ensuite pour les troisième et quatrième séquences S3 et S4 représentées à la figure 13.

Comme on peut mieux le voir sur la figure 14, le premier phaseur 122 va pour chacune de ces séquences S3 et S4 effectuer successivement un nouveau cycle.

Pour la troisième séquence S3, le premier phaseur 122 va ralentir le produit P'3 de la deuxième file F2 pour l'aligner transversalement et former un lot avec le produit P6 de la première file F1.

De même, pour la quatrième séquence S4, le premier phaseur 122 réalise une nouvelle première étape de ralentissement afin de ralentir le produit P'4 de la deuxième file F2 pour former un autre lot avec le produit P7 de la première file F1.

La figure 15 représente le flux F de produits après traitement par le premier phaseur 122.

On décrira ci-après ce qui se produirait lors de l'alimentation des alvéoles Ai du collecteur 24 en l'absence d'un second phaseur 222 selon l'invention pour réaliser la deuxième opération de ralentissement du procédé de régulation.

En effet, si l'on considère la première séquence S1, le produit P1 de la première file F1 est destiné à être reçu dans une première alvéole A1 , puis le collecteur 24 effectue un décalage de deux alvéoles pour présenter deux alvéoles vides A2, A3 et recevoir les produits P2 et P'1 formant le lot L1.

L'espacement entre le produit P1 et les produits P2, P'1 du lot L1 étant ici supérieur à la valeur du second pas PAS2, le collecteur 24 dispose du laps de temps T2 nécessaire pour réaliser cette opération de décalage.

Puis, en considérant la deuxième séquence S2, le collecteur 24 décale à nouveau deux alvéoles pour recevoir le lot L2 formé par les produits P3 et P'2, l'espacement entre le produit P3 et le produit P4 de la première file F1 étant supérieur ou égal à la valeur du premier pas PAS1, le collecteur 24 dispose du laps temps T1 nécessaire pour réaliser un décalage d'une alvéole en vue de recevoir le produit P4.

Avantageusement, l'agencement 10 comporte en amont du collecteur 24 et en aval du second phaseur 222 des moyens de détection 45 qui sont susceptibles de reconnaître la position des produits Pn, P'n sur l'une et ou l'autre des files F1, F2 pour déterminer s'il s'agit d'un lot comportant deux produits Pn et P'n côte à côte ou d'un produit seul situé sur l'une ou l'autre des files F1, F2.

De préférence, les moyens de détection 45 sont aussi aptes à dénombrer la quantité de produits Pn et P'n transmis au collecteur 24.

Les moyens de détection 45 sont susceptibles d'émettre un signal de détection correspondant qui est susceptible d'être exploité pour commander sélectivement le collecteur 24 en effectuant selon le cas un décalage d'une alvéole ou un décalage simultané de deux alvéoles de manière que les alvéoles Ai du collecteur 24 soient systématiquement remplies par un produit Pn ou P'n et que le train d'alvéoles ne comporte jamais d'alvéole vide après être passé en vis-à-vis de la zone d'arrivée 20 du tapis..

Avantageusement, le procédé selon l'invention comporte une étape finale de détection au cours de laquelle les moyens de détection 45 détectent la présence des produits Pn, P'n sur l'une et/ou l'autres des première et deuxième files F1, F2 de manière à commander sélectivement le collecteur 24.

Après remplissage d'une de deux alvéoles, le collecteur 24 est donc commandé en fonction des produits Pn et/ou P'n suivants.

Le collecteur 24 est ainsi commandé de manière à décaler sélectivement l'alvéole A1 contenant P1 puis les deux alvéoles A2, A3 remplies par L1, soit par les produits P'1 et P2, et présenter respectivement une ou deux alvéoles vides destinées à collecter le ou les produits Pn, P'n suivants, ici deux alvéoles A4, A5 pour les produits P3, P'2 formant le lot L2.

Si la troisième séquence S3 ne présente pas de problème particulier pour le transfert des produits P5, P'3, P6 au collecteur 24, il n'en est pas de même de la quatrième séquence S4.

En effet, dans cette séquence S4, l'espacement entre le produit P'5 situé sur la deuxième file F2 et le lot L4 formé des produits P7 et P'4 situé en aval est inférieur à la valeur du second pas PAS2 de sorte que le collecteur 24 ne dispose pas du laps de temps T2 nécessaire pour procéder, après le remplissage des alvéoles par les produits P7 et P'4 du lot L4, au décalage de deux alvéoles lui permettant de présenter de nouveau deux alvéoles vides, en particulier une alvéole en vis-à-vis de la deuxième file F2 pour recevoir le produit P'5.

Il est à noter que le problème posé par la séquence S4 serait analogue si cette dernière ne comportait pas le produit P'4 associé au produit P7 pour former le lot L4.

En effet, dès lors qu'une séquence comporte un produit Pn, ici le produit P7, sur la première file F1 suivi immédiatement en amont d'un produit P'n, ici le produit P'5, sur la deuxième file F2, il est nécessaire que l'espacement E entre ces deux produits P7, P'5 présente une valeur supérieure ou égale à la deuxième valeur de consigne déterminée PAS2.

A défaut, le collecteur 24 ne dispose pas, après que le produit P7 ait pénétré dans l'alvéole, du temps nécessaire pour procéder à un décalage simultané de deux alvéoles Ai permettant de présenter de nouveau une alvéole Ai vide en vis-à-vis de la deuxième file F2 et recevoir le produit P'5.

Une telle séquence est donc, du seul fait de la valeur d'espacement E entre les produits P7 et P'5 inférieure au second pas PAS2, susceptible de provoquer un incident et cela indépendamment la présence ou de l'absence du produit P'4 au côté du produit P7 ou encore de la présence d'un autre produit Pn au côté du produit P'5.

C'est la raison pour laquelle, on procède par l'intermédiaire du second phaseur 222 à la deuxième étape de ralentissement selon l'invention.

Le second phaseur 222 est apte à ralentir sélectivement un produit proximal P'n de la deuxième file F2 par rapport au produit Pn situé en aval sur la première file F1 jusqu'à ce que l'espacement E entre le produit proximal P'n et le produit aval Pn atteigne une valeur prédéterminée non nulle correspondant au moins à la deuxième valeur de consigne PAS2, dite second pas.

Conformément au procédé de régulation selon l'invention, le second phaseur 222 est commandé sélectivement pour réaliser ladite deuxième étape de ralentissement lorsque la valeur de l'espacement E entre un produit aval Pn de la première file F1 et le produit proximal P'n situé immédiatement en amont sur la deuxième file F2, est inférieure à une deuxième valeur de consigne déterminée PAS2, dite second pas.

Avantageusement, l'agencement 10 comporte des moyens de détection 44 qui sont par exemple analogues aux moyens de détection 42 et 43 décrits précédemment pour le premier phaseur 122.

Avantageusement, les moyens de détection 44 sont susceptibles de différencier les produits Pn et P'n des files F1 et F2 afin d'émettre un signal représentatif de la valeur de l'espacement E entre un produit Pn de la première file F1 et un produit P'n de la deuxième file F2.

Grâce à ces moyens 44, on réalise une deuxième étape préliminaire de contrôle, précédant la deuxième étape de ralentissement, de manière à déterminer si la valseur de l'espacement E entre un produit aval Pn de la première file F1 et le produit proximal P'n situé immédiatement en amont sur la deuxième file F2, est inférieure à une deuxième valeur de consigne déterminée PAS2 du second pas.

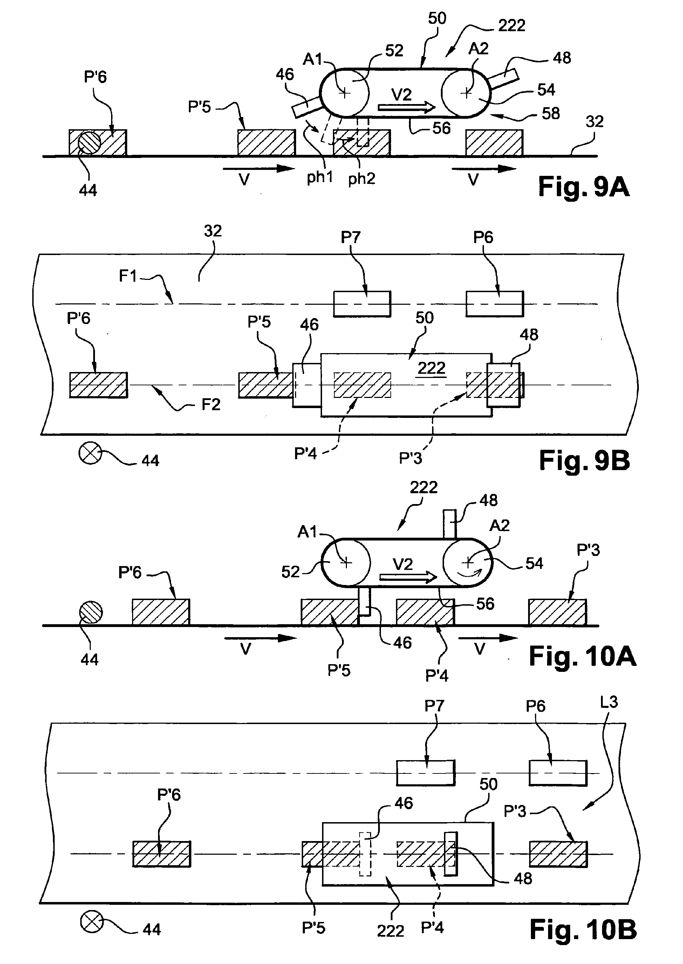

On a représenté en détail sur les figures 9 à 12 le fonctionnement du second phaseur 222 formant les seconds moyens de régulation qui illustrent plus particulièrement la deuxième étape de ralentissement et la deuxième étape intermédiaire de lâcher.

On décrira ci-après, par comparaison avec le premier phaseur 122, l'exemple de réalisation du second phaseur 222 représenté aux figures 9 à 12.

De préférence, le second phaseur 222 comporte au moins un taquet, ici un premier taquet 46 et un deuxième taquet 48.

Le second phaseur 222 est positionné verticalement au dessus du tapis 12 et il est centré sur la deuxième file F2.

Par conséquent, le second phaseur 222 est susceptible d'agir uniquement sur les produits P'n de la deuxième file F2.

Le second phaseur 222 comporte une courroie 50 qui est agencée du côté de la face supérieure 32 du tapis 12 et qui est susceptible d'entraîner en déplacement les deux taquets 46, 48.

La courroie 30 est enroulée sur une poulie amont 52 et sur une poulie aval 54 d'axes A1, A2 transversaux, par rapport à la direction longitudinale.

Les deux poulies 52, 54 sont ici agencées au-dessus du tapis 12 de manière que le brin inférieur 56 de la courroie 50 s'étende sensiblement parallèlement à la face supérieure 32 du tapis 12, et de manière que les taquets 46, 48 soient sensiblement centrés transversalement par rapport à la deuxième file F2 de produits P'n.

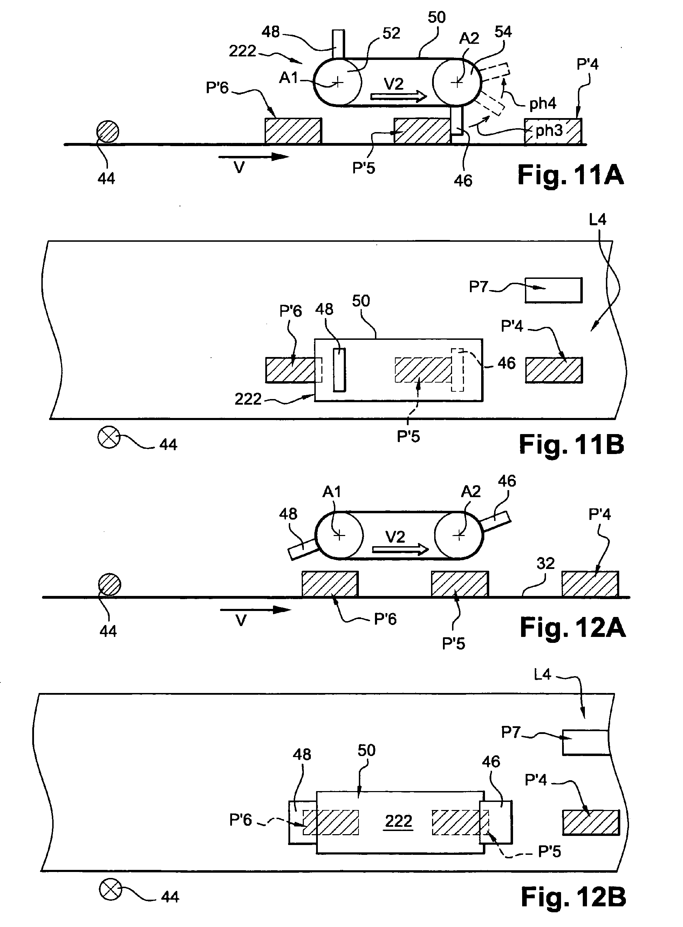

La poulie aval 54 est prévue pour être entraînée en rotation au moyen d'un servomoteur 58 de manière à entraîner la courroie 50 en rotation autour des poulies 52, 54, et de manière que le brin inférieur 56 se déplace dans le même sens que le tapis 12. A cet effet, la poulie aval 54 est entraînée en rotation dans le sens anti-horaire, en considérant les figures 10A et 11A.

La courroie 50 porte, sur sa face extérieure, le premier taquet 46 et le second taquet 48 qui, similaires, sont longitudinalement agencés à des positions sensiblement opposées le long de la courroie 50.

La mise en mouvement de la courroie 50 autour des poulies 52, 54 entraîne donc les taquets 46, 48 en déplacement.

Chaque taquet 46, 48 a ici globalement la forme d'une plaque transversale perpendiculaire à la portion de courroie 50 qui la porte.

La hauteur du brin inférieur 56 de la courroie 50 et/ou la hauteur de chaque taquet 46, 48, par rapport à la face supérieure 32 du tapis 12, est telle que, lorsqu'un taquet 46, 48 se situe sur le brin inférieur 56, il constitue un obstacle au passage des produits P'n de la deuxième file F2, ce qui correspond à une position dite engagée du taquet 46, 48.

Lorsqu'un taquet 46, 48 occupe une position engagée, le taquet 46, 48 opposé occupe une position escamotée, ce qui est par exemple le cas sur les figures 10A et 11A où le premier taquet 46 occupe une position engagée et où le second taquet 48 occupe une position escamotée.

Les taquets 46, 48 peuvent aussi occuper des positions intermédiaires, représentées sur les figures 10A et 11A, lorsqu'ils se situent sur les portions enroulées de la courroie 50.

Sur la figure 9A, la position intermédiaire occupée par le premier taquet 46 est dite position d'attente amont et la position intermédiaire occupée par le second taquet 48 est dite position d'attente aval. Ces positions d'attente sont respectivement des positions escamotées.

En position d'attente amont, le premier taquet 46 est situé à hauteur de la poulie amont 52. Il est proche d'une position engagée mais suffisamment incliné vers l'amont pour ne pas gêner le passage des produits P'n de la deuxième file F2 sous le brin inférieur 56 de la courroie 50.

En position d'attente aval, le second taquet 48 est situé à hauteur de la poulie aval 54 et il ne peut par conséquent interférer ou faire obstacle lors du passage des produits P'n sous le brin inférieur 56.

Sur la figure 12A, les deux taquets 46, 48 occupent des positions inversées par rapport à la figure 9A, le second taquet 48 occupant une position d'attente amont et le premier taquet 46 occupant une position d'attente aval.

Avantageusement, la courroie 50 est commandée successivement dans un état passif et dans un état actif.

Dans son état passif, qui est illustré par les figures 9A et 12A, la courroie 50 est arrêtée et les taquets 46, 48 occupent leurs positions d'attente.

Dans l'état actif de la courroie 50, qui est illustré par les figures 10A et 11A, le servomoteur 58 entraîne la courroie 50 en rotation autour des poulies 52, 54, ce qui provoque un déplacement longitudinal des taquets 46, 48 au dessus du tapis 12, à une vitesse dite de ralentissement V2 qui est inférieure à la vitesse de défilement V du tapis 12.

De préférence, la vitesse de ralentissement V2 du second phaseur 222 est sensiblement constante et correspond à la vitesse longitudinale VL de déplacement des taquets 46, 48.

En considérant les figures 9A à 12A, le premier taquet 46 se déplace vers l'aval, depuis sa position d'attente amont jusqu'à sa position d'attente aval, et le second taquet 48 se déplace vers l'amont, depuis sa position d'attente aval jusqu'à sa position d'attente amont.

Au cours du déplacement du premier taquet 46 vers l'aval, celui-ci occupe des positions engagées.

Avantageusement, la courroie 50 est commandée dans son état actif et dans son état passif en fonction des signaux émis par les moyens de détection 44 décrits précédemment, tels qu'un capteur ou un codeur, qui sont agencés en aval du premier phaseur 122 et le plus en amont possible du second phaseur 222.

Le capteur ou codeur 44 est, par exemple, constitué par une cellule électrique qui est agencée sur celui des bords longitudinaux du tapis 12 qui est adjacent à la deuxième file F2.

Avantageusement, le signal de détection du capteur 44 est tout d'abord exploité pour contrôler l'espacement E entre un produit aval Pn de la première file F1, tel que le produit, et un produit proximal amont P'n de la deuxième file F2, c'est-à-dire pour déterminer par exemple la valeur de l'espacement E entre le produit P7 et le produit P'5.

La deuxième étape de ralentissement est mise en oeuvre sélectivement dès lors que la valeur déterminée de l'espacement E ainsi contrôlée est inférieure à la valeur du second pas PAS2.

Avantageusement, le signal de détection des moyens de détection 44 est encore exploité en temps réel pour la commande sélective du second phaseur 222, en particulier pour assurer le déclenchement synchrone du servomoteur 58 à l'instant adéquat.

Avantageusement, on synchronise la commande de l'entraînement de la courroie 50 du phaseur 222 avec la détection des produits P'n de la deuxième file F2 de sorte que le phaseur 222 est susceptible de ralentir les produits P'n indépendamment des variations de la valeur de l'espacement E d'une séquence à une autre.

Comme expliqué précédemment, cette caractéristique de fonctionnement sélectif est particulièrement avantageuse pour permettre un fonctionnement fiable de l'agencement 10 selon l'invention à haute cadence, par exemple au-delà de 900 produits par minute et plus particulièrement lorsque les tapis d'alimentation 14, 16 ont des vitesses VA1, VA2 différentes.

La vitesse de ralentissement V2 du second phaseur 222 est déterminée, selon la quatrième séquence S4 représentée, de manière que le produit P'5 de la deuxième file F2 parcourant la distance longitudinale, dite de ralentissement, comprise entre les positions engagées amont et aval d'un taquet 46, 48, les produits P7 et P'4 du lot L4 situé en aval parcourent simultanément à la vitesse de défilement V une distance longitudinale suffisante pour que, lorsqu'on réalise le lâcher du produit proximal P'5, la valeur de l'espacement E initial ait augmentée pour atteindre une valeur au moins égale à la valeur du second pas PAS2.

On décrira ci-après en détail le fonctionnement du second phaseur 222 qui est dans son principe similaire à celui du premier phaseur 122 dans le cas du traitement de la quatrième séquence S4.

Alors que la courroie 50 est dans un état passif où le premier taquet 46 occupe sa position d'attente amont (figure 9A), le capteur 44 détecte successivement, en amont du phaseur 222, l'arrivée du produit P7 de la première file F1, ici associé au produit P'4 de la deuxième file F2 pour former le lot L4, puis celle du produit proximal P'5 et détermine alors la valeur de l'espacement E entre les produits P7 et P'5.

Selon la quatrième séquence S4, l'espacement E entre le produit P7 de la première file F1 et le produit P'5 de la deuxième file F2 est inférieur à la valeur du second pas PAS2.

Le phaseur 222 va donc ralentir le produit proximal P'5 situé, dans la deuxième file F2, immédiatement en amont du produit P7 et du produit P'4.

Avantageusement, le signal de détection émis par le capteur ou codeur 44 est exploité pour déclencher sélectivement et de manière synchrone la mise en marche du servomoteur 58 par rapport au déplacement du produit proximal P'5.

Ainsi, la courroie 50 passe de son état passif à son état actif, et le premier taquet 46 passe de sa position d'attente amont à sa position engagée, comme cela est représenté sur les figures 9A et 7A.

Le premier taquet 46 est alors entraîné longitudinalement vers l'aval, à la vitesse de ralentissement V2.

Comme la vitesse de ralentissement V2 du premier taquet 46 est inférieure à la vitesse de défilement V du produit proximal P'5, le produit P'5 rejoint le premier taquet 46 et vient en butée contre la face transversale amont de celui-ci, ce qui provoque un glissement dudit produit P'5 sur le tapis 12.

Le produit proximal P'5 se déplace dès lors longitudinalement à la vitesse de ralentissement V2 imposée par le premier taquet 46, jusqu'à ce que le premier taquet 46 vienne occuper une position escamotée conformément à la deuxième étape intermédiaire de lâcher.

On note que, lors du passage de la courroie 50 de l'état passif à l'état actif, la mise en marche du servomoteur 58 comporte une phase préalable d'accélération ph1, qui permet à la courroie 50 de passer d'une vitesse longitudinale d'entraînement VL nulle à une vitesse longitudinale d'entraînement VL stabilisée égale à la vitesse de ralentissement V2.

De préférence, la position d'attente amont est choisie de manière que le premier taquet 46 atteigne une position intermédiaire d'engagement à la fin de la phase d'accélération ph1, avant qu'il ait atteint sa première position engagée verticale.

Sur la figure 9A, on a représenté en trait interrompu fin la position intermédiaire d'engagement et en trait interrompu fort la première position engagée verticale du premier taquet 46.

La phase de déplacement du premier taquet 46 entre la position intermédiaire d'engagement et la première position engagée verticale est dite phase d'engagement ph2.

L'instant de déclenchement du servomoteur 58 est par exemple calé par rapport au signal, ici celui du capteur 44, de manière que le produit proximal P'5, arrivant à la vitesse V de défilement, vienne en contact de manière synchrone avec le premier taquet 46 pendant la phase d'engagement ph2.

Ainsi, lorsque le premier taquet 46 occupe sa première position engagée verticale, le produit proximal P'5 est bloqué en appui contre le premier taquet 46, ce qui est illustré par la figure 10A.

Dès lors, bloqué en appui contre le premier taquet 26, le produit proximal P'5 se déplace longitudinalement à la vitesse de ralentissement V2.

Comme les produits P7 et P'4 situés en aval se déplacent toujours sur le tapis 12 à la vitesse de défilement V, l'espacement amont E va progressivement s'accroître jusqu'à atteindre une valeur non nulle correspondant au moins à la valeur du second pas PAS2, de préférence égale à cette dernière.

Le basculement du taquet 46 vers sa position escamotée s'effectue donc lorsque l'espacement E a atteint au moins la valeur du second pas PAS2.

Comme cela est représenté sur la figure 12B, le produit proximal P'5 et les produits P7 et P'4 du lot L4 sont, en aval du second phaseur 222, espacés d'une valeur correspondant au moins au second pas PAS2 de manière que le collecteur 24 dispose du laps de temps T2 nécessaire pour procéder au décalage simultané de deux alvéoles Ai, Ai+1 après avoir reçu le lot L4 constitué des produits P7 et P'4 et avant que le produit proximal P'5 ne pénètre à son tour dans une alvéole vide.

En arrivant à hauteur de la poulie aval 54, le premier taquet 46 s'escamote et vient occuper sa position d'attente aval, représentée sur la figure 12A. La courroie 50 passe alors de son état actif à son état passif.

Le basculement du premier taquet 46 d'une ultime position engagée verticale, qui est représentée en trait continu sur la figure 11A, à une position intermédiaire de dégagement, qui est représentée en trait interrompu fin sur la figure 11A, est appelé phase de dégagement ph3.

Le produit proximal P'5 est alors relâché par le premier taquet 46 au cours de la phase de dégagement ph3, de manière à poursuivre sa course vers l'aval à la vitesse de défilement V, comme les produits P7 et P'4 situés en aval.

La fin de la phase de dégagement ph3 correspond au début d'une phase dite de décélération ph4, au cours de laquelle la vitesse longitudinale d'entraînement VL de la courroie 50 passe de la vitesse de ralentissement V2 à une vitesse nulle, et au cours de laquelle le premier taquet 46 passe de sa position intermédiaire de dégagement à sa position d'attente aval, qui est représentée en trait interrompu fort sur la figure 11A.

Le second phaseur 222 réalise ainsi conformément au procédé selon l'invention la deuxième étape de ralentissement.

Le traitement de la séquence S4 qui vient d'être décrit à titre d'exemple correspond à un cycle complet du second phaseur 222.

Comme illustré par la figure 12A, le second taquet 48 occupant sa position d'attente amont, le phaseur 222 est alors prêt à ralentir un nouveau produit proximal P'n de la deuxième file F2 dont la valeur de l'espacement E par rapport au produit Pn de la première file F1 situé immédiatement en aval serait inférieure à la valeur du second pas PAS2.

Avantageusement, le taquet 46, 48 du second phaseur 222 est commandé sélectivement depuis sa position escamotée d'attente vers sa position engagée lorsque la valeur de l'espacement E entre un produit aval Pn de la première file F1 et le produit proximal P'n situé immédiatement en amont sur la deuxième file F2 est inférieure à une deuxième valeur de consigne déterminée, dite second pas PAS2.

En variante non représentée, le premier phaseur 122 et le second phaseur 222 sont structurellement identiques au phaseur perfectionné 23 décrit par le demandeur dans sa demande de brevet français FR N°0550528 déposée le 28.02.2005 (non publiée), à laquelle on se reportera pour de plus amples détails.

Grâce à l'agencement 10 selon l'invention, il est possible de conserver une vitesse de défilement V particulièrement élevée, car les produits Pn, P'n du flux F sont uniquement ralentis et non pas temporairement arrêtés avec une vitesse longitudinale VL nulle comme auparavant, notamment avec des moyens de phasage à dispositif d'aspiration selon l'état de la technique.

C'est la raison pour laquelle l'invention permet d'atteindre des hautes cadences, par exemple comprise entre 900 et 1100 produits par minute, selon le type de produit, soit des cadences qui sont très supérieures à celles atteintes auparavant avec les solutions de l'état de la technique.

L'invention trouve à s'appliquer avec tous types de produits mais est cependant particulièrement avantageuse pour certains types de produits, dits non accumulables, par exemple des produits en sachets qui ne possèdent pas de surfaces d'appui rigides définissant des points de contact précis entre les produits.

De plus, le traitement des produits Pn, P'n est réalisé sans perturber la position transversale des produits, ni modifier l'orientation des produits.

## Revendications

1. Procédé de régulation pour ordonner un flux (F) de produits (Pn, P'n) comportant au moins une première file (F1) de produits (Pn) et une deuxième file (F2) de produits (P'n), parallèle à la première file (F1), qui sont transportés longitudinalement sur un tapis de convoyage (12) à une vitesse de défilement (V), depuis une zone d'arrivée (18) amont vers une zone de sortie (20) aval, pour alimenter un dispositif de transfert (24) à alvéoles (Ai), **caractérisé en ce que** le procédé comporte au moins :
- une première étape de ralentissement qui, lorsque la valeur de l'espacement (E) entre un premier produit donné (Pn, P'n) appartenant à l'une des files (F1, F2) et un second produit (Pn, P'n), situé immédiatement en amont et appartenant à l'autre desdites files (F1, F2) est inférieure à une première valeur de consigne déterminée, dite premier pas (PAS1), consiste à ralentir sur le tapis ledit premier produit (Pn, P'n) par rapport au second produit (Pn, P'n) sans modifier la vitesse de défilement (V) du tapis, jusqu'à ce que l'espacement (E) entre ledit premier produit (Pn, P'n) de la file (F1, F2) et le second produit associé (Pn, P'n) de l'autre file (F1, F2) atteigne une première valeur prédéterminée sensiblement nulle pour laquelle les premier et second produits (Pn, P'n) sont globalement alignés selon la direction transversale ; et
- une deuxième étape de ralentissement qui, lorsque la valeur de l'espacement (E) entre un produit aval (Pn) de la première file (F1) et le produit proximal (P'n) situé immédiatement en amont sur la deuxième file (F2), est inférieure à une deuxième valeur de consigne déterminée, dite second pas (PAS2), consiste à ralentir ledit produit proximal (P'n) par rapport au produit (Pn) situé en aval sur la première file (F1) jusqu'à ce que l'espacement (E) entre le produit proximal (P'n) de la deuxième file (F2) et le produit (Pn) de la première file (F1) atteigne une valeur prédéterminée non nulle correspondant au moins à la deuxième valeur de consigne (PAS2) du second pas,
lesdites première étape de ralentissement et deuxième étape de ralentissement étant respectivement mises en oeuvre sélectivement de manière à mettre en phase l'espacement (E) entre deux produits (Pn) et (P'n) consécutifs appartenant respectivement à l'une et l'autre des première et deuxième files (F1, F2) selon une séquence (PAS1, PAS2) déterminée en fonction du dispositif de transfert (24) à alvéoles (Ai).

2. Procédé de régulation selon la revendication 1, **caractérisé en ce que**, pour une vitesse de défilement (V) donnée du tapis (12), la valeur du premier pas (PAS1) est déterminée de manière que le dispositif de transfert (24) dispose du laps de temps minimum (T1) nécessaire pour décaler transversalement une alvéole (Ai) et la valeur du second pas (PAS2) est déterminée de manière que le dispositif de transfert (24) dispose du laps de temps minimum (T2) nécessaire pour décaler transversalement deux alvéoles (Ai, Ai+1) simultanément.

3. Procédé de régulation selon l'une des revendications 1 ou 2, **caractérisé en ce qu'**il comporte :
- une première étape préliminaire de contrôle, précédant la première étape de ralentissement, de manière à déterminer si la valeur de l'espacement (E) entre un premier produit donné (Pn, P'n) appartenant à l'une des files (F1, F2) et un second produit (Pn, P'n) situé immédiatement en amont et appartenant à l'autre desdites files (F1, F2) est inférieure à la première valeur de consigne déterminée (PAS1) du premier pas ; et
- une deuxième étape préliminaire de contrôle, précédant la deuxième étape de ralentissement, de manière à déterminer si la valeur de l'espacement (E) entre un produit aval (Pn) de la première file (F1) et le produit proximal (P'n) situé immédiatement en amont sur la deuxième file (F2) est inférieure à une deuxième valeur de consigne déterminée (PAS2) du second pas.

4. Procédé de régulation selon l'une quelconque des revendications précédentes, **caractérisé en ce qu'**il comporte :
- une première étape intermédiaire de lâcher succédant à la première étape de ralentissement au cours de laquelle des premiers moyens de régulation (122) relâchent les premier et second produits (Pn, P'n) globalement alignés selon la direction transversale de manière que les premier et second produits (Pn, P'n) se déplacent à la vitesse de défilement (V) du tapis (12) vers des seconds moyens de régulation (222) situés en aval des premiers moyens de régulation (122) ; et
- une deuxième étape intermédiaire de lâcher, succédant à la deuxième étape de ralentissement, au cours de laquelle les seconds moyens de régulation (222) relâchent le produit proximal (P'n) ralenti de la deuxième file (F2) avec un espacement (E) par rapport au produit aval (Pn) de la première file (F1) le précédant au moins égal au deuxième pas (PAS2) et que ledit produit proximal (P'n) poursuive son déplacement vers l'aval à la vitesse de défilement (V) du tapis (12) en direction du dispositif de transfert (24) à alvéoles (Ai).

5. Procédé de régulation selon l'une quelconque des revendications précédentes, **caractérisé en ce qu'**il comporte :
- une étape finale de détection au cours de laquelle des moyens de détection (45), agencés en amont du dispositif de transfert (24), détectent la présence des produits (Pn, P'n) sur l'une et/ou l'autre des première et deuxième files (F1, F2) de manière à commander sélectivement, après remplissage, le dispositif de transfert (24) pour décaler d'une alvéole (Ai) ou de deux alvéoles (Ai, Ai+1) remplies et de manière à présenter respectivement une ou deux alvéoles (Ai, Ai+1) vides pour collecter le ou les produits (Pn, P'n) suivants.

6. Agencement, en particulier pour la mise en oeuvre du procédé de régulation selon l'une quelconque des revendications précédentes, du type comportant un flux (F) de produits (Pn, P'n) constitué par au moins une première file (F1) de produits (Pn) et une deuxième file (F2) de produits (P'n), parallèle à la première file (F1), qui sont transportés longitudinalement sur un tapis de convoyage (12) à une vitesse de défilement (V), depuis une zone d'arrivée (18) amont vers une zone de sortie (20) aval, dans lequel le flux (F) de produits (Pn, P'n) est destiné à alimenter un dispositif de transfert (24) à alvéoles (Ai), dit collecteur, agencé en aval de la zone de sortie (20) du tapis (12), de manière à présenter respectivement en vis-à-vis de chacune desdites première et deuxième files (F1, F2) une alvéole (Ai) vide associée destinée à contenir au moins un produit (Pn) ou (P'n),
**caractérisé en ce qu'**il comporte entre la zone d'arrivée (18) et la zone de sortie (20) du tapis (12) :
- des premiers moyens de régulation (122), dits premier phaseur, qui, lorsque la valeur de l'espacement (E) entre un premier produit donné (Pn, P'n) appartenant à l'une des files (F1, F2) et un second produit (Pn, P'n) situé immédiatement en amont et appartenant à l'autre desdites files (F1, F2) est inférieure à une première valeur de consigne déterminée, dite premier pas (PAS1), sont aptes à ralentir sélectivement sur le tapis (12) ledit premier produit (Pn, P'n) par rapport au second produit (Pn, P'n), sans modifier la vitesse de défilement (V) du tapis (12), jusqu'à ce que l'espacement (E) entre ledit premier produit (Pn, P'n) de la file (F1, F2) et le second produit associé (Pn, P'n) de l'autre file (F1, F2) atteigne une première valeur prédéterminée sensiblement nulle pour laquelle les premier et second produits (Pn, P'n) sont globalement alignés selon la direction transversale ; et
- des seconds moyens de régulation (222), dit second phaseur, agencé en aval des premiers moyens de régulation (122) qui, lorsque la valeur de l'espacement (E) entre un produit aval (Pn) de la première file (F1) et le produit proximal (P'n) situé immédiatement en amont sur la deuxième file (F2), est inférieure à une deuxième valeur de consigne déterminée, dite second pas (PAS2), sont aptes à ralentir sélectivement ledit produit proximal (P'n) par rapport au produit (Pn) situé en aval sur la première file (F1) jusqu'à ce que l'espacement (E) entre le produit proximal (P'n) et le produit aval (Pn) atteigne une valeur prédéterminée non nulle correspondant au moins à la deuxième valeur de consigne (PAS2) du second pas.

7. Agencement selon la revendication 6, **caractérisé en ce que** le premier phaseur (122) comporte au moins un taquet (26, 28) escamotable qui est commandé successivement entre :
- au moins une position engagée dans laquelle le taquet (26, 28) s'interpose, par contact, devant un premier produit donné (Pn, P'n) de l'une des files (F1, F2) en vue de le ralentir jusqu'à ce qu'il soit rejoint par un second produit (Pn, P'n) situé immédiatement en amont dans l'autre des files (F1, F2) de manière que la valeur de l'espacement (E), initialement inférieure à la première valeur de consigne déterminée, dite premier pas (PAS1), atteigne une première valeur prédéterminée sensiblement nulle pour laquelle lesdits premier et second produits (Pn, P'n) sont globalement alignés selon la direction transversale, et
- au moins une position escamotée qui permet de laisser lesdits premier et second produits (Pn, P'n) alignés l'un à côté de l'autre poursuivre leur déplacement vers l'aval à la vitesse (V) de défilement.

8. Agencement (10) selon la revendication 7, **caractérisé en ce que**, en position engagée, le taquet (26, 28) du premier phaseur (122) est commandé en translation longitudinale vers l'aval, à une vitesse (V1) déterminée, dite de ralentissement, inférieure à la vitesse de défilement (V), jusqu'à ce que la valeur de l'espacement (E) entre les premier et second produits (Pn, P'n) soit sensiblement nulle.

9. Agencement selon l'une quelconque des revendications 6 à 8, **caractérisé en ce que** le second phaseur (222) comporte au moins un taquet (46, 48) escamotable qui est commandé successivement entre :
- au moins une position engagée dans laquelle le taquet (46, 48) s'interpose, par contact, devant un produit proximal (P'n) de la deuxième file (F2) en vue de le ralentir par rapport au produit (Pn) situé immédiatement en aval sur la première file (F1), jusqu'à ce que la valeur de l'espacement (E) entre ledit produit proximal (P'n) et le produit aval (Pn), initialement inférieure à la deuxième valeur de consigne déterminée, dite second pas (PAS2), atteigne au moins une valeur prédéterminée non nulle correspondant au moins à la deuxième valeur de consigne (PAS2) du second pas ; et
- au moins une position escamotée qui permet de laisser ledit produit proximal (P'n) ralenti poursuivre son déplacement vers l'aval à la vitesse (V) de défilement.

10. Agencement (10) selon la revendication 9, **caractérisé en ce que**, en position engagée, le taquet (46, 48) du second phaseur (222) est commandé en translation longitudinale vers l'aval, à une vitesse (V2) déterminée dite de ralentissement, inférieure à la vitesse de défilement (V), jusqu'à ce que le produit proximal (P'n) de la deuxième file (F2) ralenti soit espacé du produit (Pn), situé en aval dans la première file (F1), d'un espacement (E) dont la valeur atteigne au moins la deuxième valeur de consigne (PAS2) du second pas.

11. Agencement (10) selon l'une quelconque des revendications 6 à 10, **caractérisé en ce que** le premier phaseur (122) et le second phaseur (222) comportent chacun au moins une courroie (30, 50) d'entraînement qui porte au moins un taquet (26, 28, 46, 48) et qui est agencée du côté de la face supérieure (32) du tapis (12), **en ce que** la courroie (30, 50) est enroulée sur au moins deux poulies (34, 36, 52, 54) d'entraînement de manière qu'un brin inférieur (38, 56) de la courroie (30, 50) s'étende sensiblement parallèlement à la face supérieure (32) du tapis (12), le taquet (26, 28, 46, 48) occupant des positions engagées lorsqu'il est situé sur le brin inférieur (38, 56), et **en ce que** le phaseur (122, 222) comporte des moyens (40, 58) aptes à entraîner les poulies (34, 36, 52, 54) en rotation de manière que la vitesse longitudinale (VL) d'entraînement du taquet (26, 28, 46, 48) par la courroie (30, 50) soit respectivement égale à la vitesse (V1) de ralentissement pour le premier phaseur (122) et à la vitesse (V2) de ralentissement pour le second phaseur (222).

12. Agencement (10) selon la revendication 11, **caractérisé en ce que** la courroie (30) du premier phaseur (122) comporte un état de fonctionnement passif dans lequel elle est arrêtée, chaque taquet (26, 28) occupant une position escamotée d'attente, et un état de fonctionnement actif dans lequel la courroie (30) est entraînée en rotation autour des poulies (34, 36) de manière qu'un taquet (26, 28) se déplace longitudinalement vers l'aval en position engagée, et **en ce que** la courroie (30) est commandée dans son état actif lorsqu'au moins un capteur (42, 43), agencé en amont du premier phaseur (122), détecte un second produit (Pn, P'n) appartenant à l'une des files (F1, F2) dont la valeur de l'espacement (E) par rapport à un premier produit donné (Pn, P'n) situé immédiatement en aval et appartenant à l'autre desdites files (F1, F2) est inférieure à la première valeur de consigne déterminée, dite premier pas (PAS1).

13. Agencement (10) selon la revendication 12, **caractérisé en ce que** le taquet (26, 28) du premier phaseur (122) est commandé sélectivement depuis sa position escamotée d'attente vers sa position engagée lorsque la valeur de l'espacement (E) entre un premier produit donné (Pn, P'n) appartenant à l'une des files (F1, F2) et un second produit (Pn, P'n) situé immédiatement en amont et appartenant à l'autre desdites files (F1, F2) est inférieure à une première valeur de consigne déterminée, dite premier pas (PAS1).

14. Agencement (10) selon la revendication 13, **caractérisé en ce que** la courroie (50) du second phaseur (222) comporte un état de fonctionnement passif dans lequel elle est arrêtée, chaque taquet (46, 48) occupant une position escamotée d'attente, et un état de fonctionnement actif dans lequel la courroie (50) est entraînée en rotation autour des poulies (52, 54) de manière qu'un taquet (46, 48) se déplace longitudinalement vers l'aval en position engagée, et **en ce que** la courroie (50) est commandée dans son état actif lorsqu'au moins un capteur (44), agencé en amont du second phaseur (222), détecte dans la deuxième file (F2), un produit proximal (P'n) dont la valeur de l'espacement (E) par rapport au produit (Pn) de la première file (F1) situé immédiatement en aval est inférieure à la deuxième valeur de consigne déterminée, dite second pas (PAS2).

15. Agencement (10) selon la revendication 14, **caractérisé en ce que** le taquet (46, 48) du second phaseur (222) est commandé sélectivement depuis sa position escamotée d'attente vers sa position engagée lorsque la valeur de l'espacement (E) entre un produit aval (Pn) de la première file (F1) et le produit proximal (P'n) situé immédiatement en amont sur la deuxième file (F2), est inférieure à une deuxième valeur de consigne déterminée, dite second pas (PAS2).

## Claims

1. A regulation method for aligning a flow (F) of products (Pn, P'n) comprising at least a first line (F1) of products (Pn) and a second line (F2) of products (P'n), parallel to the first line (F1), which are transported longitudinally on a conveyor belt (12) at a running speed (V) from an upstream arrival area (18) to a downstream output area (20) in order to feed a transfer device (24) for transfer into cells (Ai), **characterized in that** it comprises at least:
- a first slowing-down step which, when the spacing value (E) between a given first product (Pn, P'n) belonging to one of the lines (F1, F2) and a second product (Pn, P'n) situated immediately upstream and belonging to the other of said lines (F1, F2) is less than a first determined set value, called the first pitch (PAS1), consists in slowing down said first product (Pn, P'n) relative to the second product (Pn, P'n) on the belt without changing the running speed (V) of the belt until the spacing (E) between said first product (Pn, P'n) from the line (F1, F2) and the associated second product (Pn, P'n) from the other line (F1, F2) reaches a predetermined, approximately zero, first value for which the first and second products (Pn, P'n) are generally aligned in the transverse direction; and
- a second slowing-down step which, when the spacing value (E) between a downstream product (Pn) from the first line (F1) and the proximal product (P'n) situated immediately upstream in the second line (F2), is less than a second determined set value, called the second pitch (PAS2), consists in slowing down said proximal product (P'n) relative to the product (Pn) situated downstream in the first line (F1) until the spacing (E) between the proximal product (P'n) from the second line (F2) and the product (Pn) from the first line (F1) reaches a predetermined, nonzero value corresponding to at least the second set value (PAS2) of the second pitch;
said first slowing-down step and said second slowing-down step being respectively employed selectively so as to bring into phase the spacing (E) between two consecutive products (Pn) and (P'n) respectively belonging to one or the other of the first and second lines (F1, F2) according to a sequence (PAS1, PAS2) determined according to the cell (Ai) transfer device (24).

2. The regulation method as claimed in claim 1, **characterized in that** for a given running speed (V) of the belt (12), the value of the first pitch (PAS1) is determined so that the transfer device (24) has the minimum time lapse (T1) necessary to shift a cell (Ai) transversely, and the value of the second pitch (PAS2) is determined so that the transfer device (24) has the minimum time lapse (T2) necessary to shift two cells (Ai, Ai+1) transversely at the same time.

3. The regulation method as claimed in either of claims 1 and 2, **characterized in that** it comprises:
- a first preliminary monitoring step, preceding the first slowing-down step, so as to determine whether the value of the spacing (E) between a given first product (Pn, P'n) belonging to one of the lines (F1, F2) and a second product (Pn, P'n) situated immediately upstream and belonging to the other of said lines (F1, F2) is less than the first determined set value (PAS1) of the first pitch; and
- a second preliminary monitoring step, preceding the second slowing-down step, so as to determine whether the spacing value (E) between a downstream product (Pn) from the first line (F2) and the proximal product (P'n) situated immediately upstream in the second line (F2) is less than a second determined set value (PAS2) of the second pitch.

4. The regulation method as claimed in any one of the preceding claims, **characterized in that** it comprises:
- a first intermediate release step, following the first slowing-down step, in the course of which first regulation means (122) let go of the first and second products (Pn, P'n), generally aligned in the transverse direction, so that the first and second products (Pn, P'n) move at the running speed (V) of the belt (12) toward second regulation means (222) situated downstream of the first regulation means (122); and
- a second intermediate release step, following the second slowing-down step, in the course of which the second regulation means (222) let go of the slowed-down proximal product (P'n) from the second line (F2) with a spacing (E) relative to the preceding downstream product (Pn) from the first line (F1) equal to at least the second pitch (PAS2) and so that said proximal product (P'n) continues its movement downstream at the running speed (V) of the belt (12) in the direction of the cell (Ai) transfer device (24).

5. The regulation method as claimed in any one of the preceding claims, **characterized in that** it comprises:
- a final detection step in the course of which detection means (45), arranged upstream of the transfer device (24), detect the presence of products (Pn, P'n) in one and/or the other of the first and second lines (F1, F2) so as to selectively control, after filling, the transfer device (24) in order to shift by one filled cell (Ai) or by two filled cells (Ai, Ai+1) and so as to present one or two empty cells (Ai, Ai+1) respectively in order to collect the following product(s)(Pn, P'n).

6. A layout, in particular for implementing the regulation method as claimed in any one of the preceding claims, of the type comprising a flow (F) of products (Pn, P'n) consisting of at least a first line (F1) of products (Pn) and a second line (F2) of products (P'n), parallel to the first line (F1), which are transported longitudinally on a conveyor belt (12) at a running speed (V) from an upstream arrival area (18) to a downstream output area (20), in which the flow (F) of products (Pn, P'n) is intended to feed a transfer device (24) for transfer into cells (Ai), called the collector, arranged downstream of the output area (20) of the belt (12) so as to present, opposite each of said first and second lines (F1, F2) respectively, an associated empty cell (Ai) intended to contain at least one product (Pn) or (P'n),
**characterized in that** it comprises between the arrival area (18) and the output area (20) of the belt (12):
- first regulation means (122), called the first phaser, which, when the spacing value (E) between a given first product (Pn, P'n) belonging to one of the lines (F1, F2) and a second product (Pn, P'n) situated immediately upstream and belonging to the other of said lines (F1, F2) is less than a first determined set value, called the first pitch (PAS1), are able to selectively slow down said first product (Pn, P'n) relative to the second product (Pn, P'n) on the belt (12) without changing the running speed (V) of the belt (12) until the spacing (E) between said first product (Pn, P'n) from the line (F1, F2) and the associated second product (Pn, P'n) from the other line (F1, F2) reaches a predetermined, approximately zero, first value for which the first and second products (Pn, P'n) are generally aligned in the transverse direction;
and
- second regulation means (222), called the second phaser, arranged downstream of the first regulation means (122) which, when the spacing value (E) between a downstream product (Pn) from the first line (F1) and the proximal product (P'n) situated immediately upstream in the second line (F2) is less than a second determined set value, called the second pitch (PAS2), are able to selectively slow down said proximal product (P'n) relative to the product (Pn) situated downstream in the first line (F1) until the spacing (E) between the proximal product (P'n) and the downstream product (Pn) reaches a predetermined, nonzero value corresponding to at least the second set value (PAS2) of the second pitch.

7. The layout as claimed in claim 6, **characterized in that** the first phaser (122) comprises at least one retractable stop (26, 28) which is successively controlled between:
- at least one engaged position in which the stop (26, 28) intervenes, by contact, in front of a given first product (Pn, P'n) from one of the lines (F1, F2) with a view to slowing it down until it is met by a second product (Pn, P'n) situated immediately upstream in the other of the lines (F1, F2) so that the spacing value (E), which is initially less than the first determined set value, called the first pitch (PAS1), reaches a predetermined, approximately zero, first value for which said first and second products (Pn, P'n) are generally aligned in the transverse direction; and
- at least one retracted position which makes it possible to allow said first and second products (Pn, P'n), aligned next to one another, to continue their movement downstream at the running speed (V).

8. The layout as claimed in claim 7, **characterized in that** in the engaged position the stop (26, 28) of the first phaser (122) is controlled in downstream longitudinal translation at a determined speed (V1), called the slowing-down speed, which is less than the running speed (V) until the value of the spacing (E) between the first and second products (Pn, P'n) is approximately zero.

9. The layout as claimed in any one of claims 6 to 8, **characterized in that** the second phaser (222) comprises at least one retractable stop (46, 48) which is successively controlled between:
- at least one engaged position in which the stop (46, 48) intervenes, by contact, in front of a proximal product (P'n) from the second line (F2) with a view to slowing it down relative to the product (Pn) situated immediately downstream in the first line (F1), until the value of the spacing (E) between said proximal product (P'n) and the downstream product (Pn), which is initially less than the second determined set value, called the second pitch (PAS2), reaches at least a predetermined, nonzero value corresponding to at least the second set value (PAS2) of the second pitch; and
- at least one retracted position which makes it possible to allow said slowed-down proximal product (P'n) to continue its movement downstream at the running speed (V).

10. The layout (10) as claimed in claim 9, **characterized in that** in the engaged position the stop (46, 48) of the second phaser (222) is controlled in downstream longitudinal translation at a determined speed (V2), called the slowing-down speed, which is less than the running speed (V) until the slowed-down proximal product (P'n) from the second line (F2) is spaced apart from the product (Pn) situated downstream in the first line (F1) by a spacing (E) with a value that reaches at least the second set value (PAS2) of the second pitch.

11. The layout (10) as claimed in any one of claims 6 to 10, **characterized in that** the first phaser (122) and the second phaser (222) each comprise at least one driving belt (30, 50) which bears at least one stop (26, 28, 46, 48) and which is arranged on the side of the upper face (32) of the belt (12), **in that** the driving belt (30, 50) is wound over at least two driving pulleys (34, 36, 52, 54) such that a return strand (38, 56) of the driving belt (30, 50) extends approximately parallel to the upper face (32) of the belt (12), the stop (26, 28, 46, 48) occupying engaged positions when it is situated on the return strand (38, 56), and **in that** the phaser (122, 222) comprises means (40, 58) capable of rotationally driving the pulleys (34, 36, 52, 54) such that the longitudinal driving speed (VL) of the stop (26, 28, 46, 48) by the driving belt (30, 50) is equal to the slowing-down speed (V1) for the first phaser (122) and to the slowing-down speed (V2) for the second phaser (222) respectively.

12. The layout (10) as claimed in claim 11, **characterized in that** the driving belt (30) of the first phaser (122) has a passive operating state in which it is halted, with each stop (26, 28) occupying a retracted standby position, and an active operating state in which the driving belt (30) is rotationally driven around the pulleys (34, 36) such that a stop (26, 28) moves longitudinally downstream in the engaged position, and **in that** the driving belt (30) is commanded into its active state when at least one sensor (42, 43), arranged upstream of the first phaser (122), detects a second product (Pn, P'n) belonging to one of the lines (F1, F2) with a spacing value (E) relative to a given first product (Pn, P'n) situated immediately downstream and belonging to the other of said lines (F1, F2) is less than the first determined set value, called the first pitch (PAS1).

13. The layout (10) as claimed in claim 12, **characterized in that** the stop (26, 28) of the first phaser (122) is selectively commanded from its retracted standby position to its engaged position when the value of the spacing (E) between a given first product (Pn, P'n) belonging to one of the lines (F1, F2) and a second product (Pn, P'n) situated immediately upstream and belonging to the other of said lines (F1, F2) is less than a first determined set value, called the first pitch (PAS1).

14. The layout (10) as claimed in claim 13, **characterized in that** the driving belt (50) of the second phaser (222) has a passive operating state in which it is halted, with each stop (46, 48) occupying a retracted standby position, and an active operating state in which the driving belt (50) is rotationally driven around the pulleys (52, 54) such that a stop (46, 48) moves longitudinally downstream in the engaged position, and **in that** the driving belt (50) is commanded into its active state when at least one sensor (44), arranged upstream of the second phaser (222), detects in the second line (F2) a proximal product (P'n) with a spacing value (E) relative to the product (Pn) from the first line (F1) situated immediately downstream less than the second determined set value, called the second pitch (PAS2).

15. The layout (10) as claimed in claim 14, **characterized in that** the stop (46, 48) of the second phaser (222) is selectively commanded from its retracted standby position to its engaged position when the value of the spacing (E) between a downstream product (Pn) from the first line (F1) and the proximal product (P'n) situated immediately upstream in the second line (F2) is less than a second determined set value, called the second pitch (PAS2).

## Patentansprüche

1. Regulierungsverfahren zum Ordnen eines Stromes (F) von Produkten (Pn, P'n) mit mindestens einer ersten Reihe (F1) von Produkten (Pn) und einer zweiten Reihe (F2) von Produkten (P'n), parallel zu der ersten Reihe (F1), die in Längsrichtung auf einem Förderband (12) mit einer Durchlaufgeschwindigkeit (V) von einer Zuführungszone (18) zu einer Austrittszone von oben nach unten transportiert werden, um eine Transportvorrichtung (24) mit wabenförmigen Zellen (Ai) zu bestücken, **dadurch gekennzeichnet, dass** das Verfahren mindestens folgendes aufweist :
- eine erste Phase der Verlangsamung, die, wenn der Wert für den Abstand (E) zwischen einem ersten gegebenen Produkt (Pn, P'n), das zu einer der Reihen (F1, F2) gehört, und einem zweiten Produkt (Pn, P'n), das direkt davor angeordnet ist, und zu der anderen der Reihen (F1, F2) gehört, kleiner ist als ein erster, voreingestellter Sollwert, erster Schritt (PAS1) genannt, darin besteht, auf dem Förderband das erste Produkt (Pn, P'n) gegenüber dem zweiten Produkt (Pn, P'n) zu verlangsamen, ohne die Durchlaufgeschwindigkeit (V) des Förderbandes zu verändern, bis der Abstand (E) zwischen dem ersten Produkt (Pn, P'n) der Reihe (F1, F2) und dem zweiten, zugehörigen Produkt (Pn, P'n) der anderen Reihe (F1, F2) einen vorher festgelegten, ersten Wert von im wesentlichen Null erreicht, bei dem die ersten und zweiten Produkte (Pn, P'n) im allgemeinen in Querrichtung ausgerichtet sind ; und
- eine zweite Phase der Verlangsamung, die, wenn der Wert für den Abstand (E) zwischen einem Produkt (Pn) hinter der ersten Reihe (F1) und dem proximalen Produkt (P'n), das sich direkt vor der zweiten Reihe (F2) befindet, kleiner ist als ein zweiter, voreingestellter Sollwert, zweiter Schritt (PAS2) genannt, darin besteht, auf dem Förderband das proximale Produkt (P'n) gegenüber dem Produkt (Pn), das sich hinter der ersten Reihe (F1) befindet, zu verlangsamen, bis der Abstand (E) zwischen dem proximalen Produkt (P'n) der zweiten Reihe (F2) und dem Produkt (Pn) der ersten Reihe (F1) einen vorher festgelegten Wert erreicht, der nicht Null ist, und mindestens dem zweiten Sollwert (PAS2) des zweiten Schrittes entspricht,
wobei die erste Phase der Verlangsamung und die zweite Phase der Verlangsamung jeweils selektiv durchgeführt werden, so dass der Abstand (E) zwischen zwei aufeinander folgenden Produkten (Pn) und (P'n), die jeweils zu der einen und der anderen der ersten und zweiten Reihe (F1, F2) gehören, nach einer Sequenz (PAS1, PAS2) in Phase gebracht wird, die entsprechend der Transportvorrichtung (24) mit wabenförmigen Zellen (Ai) festgelegt wird.

2. Regulierungsverfahren nach Anspruch 1, **dadurch gekennzeichnet, dass** der Wert des ersten Schrittes (PAS1) für eine gegebene Durchlaufgeschwindigkeit (V) des Förderbandes (12) derart festgelegt wird, dass die Transportvorrichtung (24) über eine Mindestzeitspanne (T1) verfügt, die erforderlich ist, um eine wabenförmige Zelle (Ai) in Querrichtung zu verschieben, und der Wert des zweiten Schrittes (PAS2) derart festgelegt wird, dass die Transportvorrichtung (24) über eine Mindestzeitspanne (T2) verfügt, die erforderlich ist, um zwei wabenförmige Zellen (Ai, Ai+1) gleichzeitig zu verschieben.

3. Regulierungsverfahren nach einem der Ansprüche 1 oder 2, **dadurch gekennzeichnet, dass** es folgendes aufweist :
- eine erste, vorläufige Kontrollphase vor der ersten Phase der Verlangsamung, um festzustellen, ob der Wert für den Abstand (E) zwischen einem ersten gegebenen Produkt (Pn, P'n), das zu einer der Reihen (F1, F2) gehört, und einem zweiten Produkt (Pn, P'n), das unmittelbar davor angeordnet ist, und zu der anderen der Reihen (F1, F2) gehört, kleiner ist als der erste voreingestellte Sollwert (PAS1) des ersten Schrittes ; und
- eine zweite, vorläufige Kontrollphase vor der zweiten Phase der Verlangsamung, um festzustellen, ob der Wert für den Abstand (E) zwischen einem nachgeordneten Produkt (Pn) der ersten Reihe (F1) und dem proximalen Produkt (P'n), das unmittelbar davor in der zweiten Reihe angeordnet ist (F2), kleiner ist als ein zweiter voreingestellter Sollwert (PAS2) des zweiten Schrittes.

4. Regulierungsverfahren nach einem der vorhergehenden Ansprüche, **dadurch gekennzeichnet, dass** es folgendes aufweist:
- eine erste Zwischenphase des Loslassens, die der ersten Phase der Verlangsamung folgt, im Verlaufe derer erste Regulierungsmittel (122) die ersten und zweiten Produkte (Pn, P'n), die allgemein in Querrichtung ausgerichtet sind, loslassen, so dass sich die ersten und zweiten Produkte (Pn, P'n) mit Durchlaufgeschwindigkeit (V) des Förderbandes (12) zu den zweiten Regulierungsmitteln (222) hin verschieben, die hinter den ersten Regulierungsmitteln (122) angeordnet sind ; und
- eine zweite Zwischenphase des Loslassens, die der zweiten Phase der Verlangsamung folgt, im Verlaufe derer die zweiten Regulierungsmittel (222) das verlangsamte, proximale Produkt (P'n) der zweiten Reihe (F2) loslassen, das einen Abstand (E) zu dem nachgeordneten Produkt (Pn) der ersten Reihe (F1) besitzt, das ihm vorausgeht, der mindestens gleich dem zweiten Schritt (PAS2) ist, und dass das proximale Produkt (P'n) seine Verschiebung nach hinten mit der Durchlaufgeschwindigkeit (V) des Förderbandes (12) in Richtung der Transportvorrichtung (24) mit wabenförmigen Zellen (Ai) fortsetzt.

5. Regulierungsverfahren nach einem der vorhergehenden Ansprüche, **dadurch gekennzeichnet, dass** es folgendes aufweist:
- eine Endphase der Erkennung, im Verlaufe derer Erkennungsmittel (45), die vor der Transportvorrichtung (24) angeordnet sind, das Vorhandensein von Produkten (Pn, P'n) in der einen und / oder der anderen der ersten und zweiten Reihen (F1, F2) erkennen, um nach dem Füllen die Transportvorrichtung (24) selektiv zu steuern, so dass eine gefüllte wabenförmige Zelle (Ai) oder zwei gefüllte wabenförmige Zellen (Ai, Ai+1) verschoben werden, und um jeweils eine leere wabenförmige Zelle (Ai) oder zwei leere wabenförmige Zellen (Ai, Ai+1) zu präsentieren, um das folgende Produkt oder die folgenden Produkte (Pn, P'n) zu sammeln.

6. Anordnung, insbesondere für die Durchführung des Regulierungsverfahren nach einem der vorhergehenden Ansprüche, mit einem Strom (F) von Produkten (Pn, P'n), der aus mindestens einer ersten Reihe (F1) von Produkten (Pn) und einer zweiten Reihe (F2) von Produkten (P'n), parallel zu der ersten Reihe (F1), besteht, die in Längsrichtung auf einem Förderband (12) mit einer Durchlaufgeschwindigkeit (V) von einer Zuführungszone (18) zu einer Austrittszone (20) von oben nach unten transportiert werden, wobei der Strom (F) von Produkten (Pn, P'n) eine Transportvorrichtung (24) mit wabenförmigen Zellen (Ai), Sammler genannt, bestücken soll, die hinter der Austrittszone (20) des Förderbandes (12) angeordnet ist, um jeweils gegenüber den ersten und zweiten Reihen (F1, F2) eine zugehörige leere wabenförmige Zelle (Ai) zu präsentieren, die mindestens ein Produkt (Pn) oder (P'n) enthalten soll,
**dadurch gekennzeichnet, dass** sie zwischen der Zuführungszone (18) und der Austrittszone (20) des Förderbandes (12) folgendes besitzt :
- erste Regulierungsmittel (122), erster Zeiger genannt, die, wenn der Wert für den Abstand (E) zwischen einem ersten gegebenen Produkt (Pn, P'n), das zu einer der Reihen (F1, F2) gehört, und einem zweiten Produkt (Pn, P'n), das direkt davor angeordnet ist, und zu der anderen der Reihen (F1, F2) gehört, kleiner ist als ein erster, voreingestellter Sollwert, erster Schritt (PAS1) genannt, in der Lage sind, das erste Produkt (Pn, P'n) gegenüber dem zweiten Produkt (Pn, P'n) selektiv auf dem Förderband (12) zu verlangsamen, ohne die Durchlaufgeschwindigkeit (V) des Förderbandes (12) zu verändern, bis der Abstand (E) zwischen dem ersten Produkt (Pn, P'n) der Reihe (F1, F2) und dem zweiten, zugehörigen Produkt (Pn, P'n) der anderen Reihe (F1, F2) einen vorher festgelegten, ersten Wert von im wesentlichen Null erreicht, bei dem die ersten und zweiten Produkte (Pn, P'n) im allgemeinen in Querrichtung ausgerichtet sind ;
- zweite Regulierungsmittel (222), zweiter Zeiger genannt, die hinter den ersten Regulierungsmitteln (122) angeordnet sind, und die, wenn der Wert für den Abstand (E) zwischen einem Produkt (Pn) hinter der ersten Reihe (F1) und dem proximalen Produkt (P'n), das sich direkt vor der zweiten Reihe (F2) befindet, kleiner ist als ein zweiter, voreingestellter Sollwert, zweiter Schritt (PAS2) genannt, in der Lage sind, das proximale Produkt (P'n) gegenüber dem Produkt (Pn), das dahinter in der ersten Reihe (F1) angeordnet ist, selektiv auf dem Förderband (12) zu verlangsamen, bis der Abstand (E) zwischen dem proximalen Produkt (P'n) und dem nachgeordneten Produkt (Pn) einen vorher festgelegten Wert erreicht, der nicht Null ist, und mindestens dem zweiten Sollwert (PAS2) des zweiten Schrittes entspricht.

7. Anordnung nach Anspruch 6, **dadurch gekennzeichnet, dass** der erste Zeiger (122) mindestens eine versenkbare Knagge (26, 28) besitzt, die nacheinander betätigt wird zwischen :
- mindestens einer eingerasteten Position, in der sich die Knagge (26, 28) durch Kontakt vor ein erstes gegebenes Produkt (Pn, P'n) einer der Reihen (F1, F2) schiebt, um es zu verlangsamen, bis es von einem zweiten Produkt (Pn, P'n) eingeholt wird, das sich unmittelbar davor in der anderen der Reihen (F1, F2) befindet, so dass der Wert für den Abstand (E), der anfangs niedriger ist als der festgelegte Sollwert, erster Schritt (PAS1) genannt, einen ersten vorbestimmten Wert erreicht, der im wesentlichen Null ist, für den die ersten und zweiten Produkte (Pn, P'n) im allgemeinen in Querrichtung ausgerichtet sind, und
- mindestens einer versenkten Position, die es erlaubt, den ersten und zweiten, nebeneinander ausgerichteten Produkten (Pn, P'n) ihre Verschiebung nach unten in Durchlaufgeschwindigkeit (V) durchführen zu lassen.

8. Anordnung (10) nach Anspruch 7, **dadurch gekennzeichnet, dass** die Knagge (26, 28) des ersten Zeigers (122) in eingerasteter Position mit einer festgelegten Geschwindigkeit (V1), Verlangsamung genannt, die geringer ist als die Durchlaufgeschwindigkeit (V), in Längsverschiebung nach unten betätigt wird, bis der Wert für den Abstand (E) zwischen den ersten und zweiten Produkten (Pn, P'n) im wesentlichen Null ist.

9. Anordnung (10) nach einem der Ansprüche 6 bis 8, **dadurch gekennzeichnet, dass** der zweite Zeiger (222) mindestens eine versenkbare Knagge (26, 28) besitzt, die nacheinander betätigt wird zwischen :
- mindestens einer eingerasteten Position, in der sich die Knagge (46, 48) durch Kontakt vor ein proximales Produkt (P'n) der zweiten Reihe (F2) schiebt, um es gegenüber dem Produkt (Pn), das sich unmittelbar danach in der ersten Reihe (F1) befindet, zu verlangsamen, bis der Wert für den Abstand (E) zwischen dem proximalen Produkt (P'n) und dem nachgeordneten Produkt (Pn), der anfangs niedriger ist als der zweite, festgelegte Sollwert, zweiter Schritt (PAS2) genannt, mindestens einen vorher festgelegten Wert erreicht, der nicht Null ist, und mindestens dem zweiten Sollwert (PAS2) des zweiten Schrittes entspricht ; und
- mindestens einer versenkten Position, die es dem verlangsamten, proximalen Produkt (P'n) erlaubt, seine Verschiebung nach unten in Durchlaufgeschwindigkeit (V) durchführen zu lassen.

10. Anordnung (10) nach Anspruch 9, **dadurch gekennzeichnet, dass** die Knagge (46, 48) des zweiten Zeigers (222) in eingerasteter Position mit einer Geschwindigkeit (V2), Verlangsamung genannt, die geringer ist als die Durchlaufgeschwindigkeit (V), in Längsverschiebung nach unten betätigt wird, bis das verlangsamte, proximale Produkt (P'n) der zweiten Reihe (F2) zu dem Produkt (Pn) beabstandet ist, das sich dahinter in der ersten Reihe (F1) befindet, und zwar in einem Abstand (E), dessen Wert mindestens den zweiten Sollwert (PAS2) des zweiten Schrittes erreicht.

11. Anordnung (10) nach einem der Ansprüche 6 bis 10, **dadurch gekennzeichnet, dass** der erste Zeiger (122) und der zweite Zeiger (222) jeweils mindestens einen Antriebsriemen (30, 50) besitzen, der mindestens eine Knagge (26, 28, 46, 48) besitzt, und der auf der Seite der Oberseite (32) des Förderbandes (12) angeordnet ist, und dass der Antriebsriemen (30, 50) auf mindestens zwei Antriebsscheiben (34, 36, 52, 54) derart aufgewickelt ist, dass ein unterer Trumm (38, 56) des Antriebsriemens (30, 50) im wesentlichen parallel zu der Oberseite (32) des Förderbandes (12) verläuft, wobei die Knagge (26, 28, 46, 48) eingerastete Positionen einnimmt, wenn sie sich an dem unteren Trumm (38, 56) befindet, und dass der Zeiger (122, 222) Mittel (40, 58) aufweist, mit denen die Antriebsscheiben (34, 36, 52, 54) gedreht werden können, so dass die längsverlaufende Antriebsgeschwindigkeit (VL) der Knagge (26, 28, 46, 48) durch den Antriebsriemen (30, 50) jeweils gleich der Verlangsamung (V1) für den ersten Zeiger (122) und der Verlangsamung (V2) für den zweiten Zeiger (222) ist.

12. Anordnung (10) nach Anspruch 11, **dadurch gekennzeichnet, dass** der Antriebsriemen (30) des ersten Zeigers (122) einen passiven Betriebszustand besitzt, in dem er angehalten ist, wobei jede Knagge (26, 28) eine versenkte Warteposition einnimmt, und einen aktiven Betriebszustand besitzt, in dem der Antriebsriemen (30) um Antriebsscheiben (34, 36) gedreht wird, so dass sich eine Knagge (26, 28) in Längsrichtung nach unten in die eingerastete Position verschiebt, und dass der Antriebsriemen (30) in seinem aktiven Zustand betätigt wird, wenn mindestens ein Sensor (42, 43), der vor dem ersten Zeiger (122) angeordnet ist, ein zweites Produkt (Pn, P'n) erkennt, das zu einer der Reihen (F1, F2) gehört, dessen Wert für den Abstand (E) gegenüber einem ersten, gegebenen Produkt (Pn, P'n), das unmittelbar dahinter angeordnet ist, und zu der anderen der Reihen (F1, F2) gehört, niedriger ist als der erste, festgelegte Sollwert, erster Schritt (PAS1) genannt.

13. Anordnung (10) nach Anspruch 12, **dadurch gekennzeichnet, dass** die Knagge (26, 28) des ersten Zeigers (122) selektiv von ihrer versenkten Warteposition in ihre eingerastete Position betätigt wird, wenn der Wert für den Abstand (E) zwischen einem ersten, gegebenen Produkt (Pn, P'n), das zu einer der Reihen (F1, F2) gehört, und einem zweiten Produkt (Pn, P'n), das unmittelbar davor angeordnet ist, und zu der anderen der Reihen (F1, F2) gehört, kleiner ist als ein erster, festgelegter Sollwert, erster Schritt (PAS1) genannt.

14. Anordnung (10) nach Anspruch 13, **dadurch gekennzeichnet, dass** der Antriebsriemen (50) des zweiten Zeigers (222) einen passiven Betriebszustand aufweist, in dem er angehalten ist, wobei jede Knagge (46, 48) eine versenkte Warteposition einnimmt, und einen aktiven Betriebszustand aufweist, in dem der Antriebsriemen (50) um Antriebsscheiben (52, 54) gedreht wird, so dass sich eine Knagge (46, 48) in Längsrichtung nach unten in die eingerastete Position verschiebt, und dass der Antriebsriemen (50) in seinem aktiven Zustand betätigt wird, wenn mindestens ein Sensor (44), der vor dem zweiten Zeiger (222) angeordnet ist, in der zweiten Reihe (F2) ein proximales Produkt (P'n) erkennt, dessen Wert für den Abstand (E) gegenüber dem Produkt (Pn) der ersten Reihe (F1), das unmittelbar dahinter angeordnet ist, niedriger ist als der zweite, festgelegte Sollwert, zweiter Schritt (PAS2) genannt.

15. Anordnung (10) nach Anspruch 14, **dadurch gekennzeichnet, dass** die Knagge (46, 48) des zweiten Zeigers (222) selektiv von ihrer versenkten Warteposition in ihre eingerastete Position betätigt wird, wenn der Wert für den Abstand (E) zwischen einem Produkt (Pn) nach der ersten Reihe (F1) und dem proximalen Produkt (P'n), das unmittelbar davor in der zweiten Reihe (F2) angeordnet ist, kleiner ist als ein zweiter, festgelegter Sollwert, zweiter Schritt (PAS2) genannt.
